# EUROPEAN PATENT SPECIFICATION

(11) **EP 1 955 938 B1**
(45) Date of publication and mention of the grant of the patent: **28.03.2012**
(21) Application number: 08250437.4
(22) Date of filing: 06.02.2008
(51) Int. Cl.: B62L 3/02, B62L 3/08

(54) **Brake device and straddle-type vehicle**
Bremsvorrichtung und Grätschsitz-Fahrzeug
Dispositif de frein et véhicule de type à enfourcher

(30) Priority: 08.02.2007 JP 2007029138; 24.04.2007 JP 2007114793; 02.11.2007 JP 2007286612
(43) Date of publication of application: 13.08.2008
(73) Proprietor: Yamaha Hatsudoki Kabushiki Kaisha, Shizuoka-ken Shizuoka 438-8501 (JP)
(72) Inventor: Fushimi, Takanobu, Iwata-shi, Shizuoka-ken 438-8501 (JP)
(74) Representative: Moreland, David

(56) References cited:
- FR-A- 2 735 440
- FR-A- 2 757 127
- JP-A- 6 321 164
- JP-A- 9 066 826
- JP-A- 10 338 183
- JP-A- 2005 104 362

## Description

### FIELD OF THE INVENTION

The present invention relates to a brake device that actuates both a front wheel brake and a rear wheel brake by operating one of two brake levers provided on both left and right handlebars.

### BACKGROUND TO THE INVENTION

Brake devices are known for use in straddle type vehicles, such as motorcycles, which actuate both a front wheel brake and a rear wheel brake when one of two brake levers provided on both left and right handlebars is operated, and which actuate only the front wheel brake when the other brake lever is operated. In such brake devices, the brake lever for actuating both the front wheel brake and the rear wheel brake (hereinafter referred to as "interlock brake lever") is connected to the rear wheel brake and a front wheel brake actuation mechanism including a master cylinder and so forth to actuate the front wheel brake by hydraulic pressure. Such an arrangement is disclosed in, for example JP-A-Hei 10-167154.

In conventional brake devices, however, the front wheel brake actuation mechanism is disposed away from the interlock brake lever, and therefore an operation force is occasionally subjected to a transmission loss in the transmission path for the operation force from the interlock brake lever to the front wheel brake actuation mechanism.

In the brake device disclosed in JP-A-Hei 10-167154, for example, the front wheel brake actuation mechanism is disposed on the handlebar opposite to that where the interlock brake lever is disposed, of both the left and right handlebars, so that the operation force of the interlock brake lever is transmitted to the front wheel brake actuation mechanism via a cable. Therefore, there occurs a transmission loss due to friction between an inner cable and an outer cable.

In an embodiment of JP2005-104362 on which the preamble of claim 1 is based, a right end of a handlebar is equipped with a right grip and a cylinder body of a master cylinder, and a right brake lever pivotably supported by the cylinder body. A left end part of the steering wheel is equipped with a left grip having a left mount and a left brake lever pivotably supported by the left mount.

A pressing part of a pushing section of the right hand brake lever contacts the back end of a piston of the master cylinder. Thrust input to the pushing section by the right brake lever forces the pushing section to rotate and thereby act on piston in order to increase the fluid pressure in the master cylinder and operate a front disk brake.

A force transfer member of the right hand brake is rotatably supported by an axis. A first interconnecting part is provided at an end of the force transfer member and is fixed to an end of an inner cable which operates the rear brake. An inner cable from the left hand brake lever is attached to a second interconnecting part of the force transfer member, which is formed at the other end of the force transfer member from the first connecting part. On operation of the left hand brake lever, the force transfer member of the right hand brake is forced to rotate around pivot axis and thereby pull the rear brake cable through an aperture in an interlocking member. A force of friction acts between the inner cable and the outer cable of the rear brake cable. If the brake operating force in the left brake lever is such that the friction force from the outer cable to the inner cable exceeds a spring energising force of a retaining spring, the interlocking member moves under the force of friction from an unactuated position to a position whereupon it presses upon pushing member in order to actuate the front wheel brake and carry out an interlocked brake operation.

JP01-338183 describes an interlocking brake lever provided on a left hand handlebar and a front brake lever is provided on a right hand handlebar.

The right hand (front) brake lever consists of a handle part and a pushing part. When the handle part of the right hand brake lever is gripped, a piece of the pushing part rotates about a pivot and pushes a piston of a master cylinder in order to raise the pressure of hydraulic fluid in the master cylinder and thereby achieve braking of the front wheel. During this process, an intermediate arm of an output distributor of the right hand (front) brake is left in an unactuated position.

Upon gripping of the left hand (interlock) brake lever, a cable is pulled toward the left hand handle. The other end of the cable is attached to the intermediate arm of the output distributor of the right hand (front) brake which pushes on piece of the pushing section in order to actuate the front brake whilst a floating fulcrum rotates in an operating direction such that the whole intermediate arm moves in the direction of the vehicle front to thereby pull a rear brake cable and activate the rear brake.

JP09-066826 describes interlocking brake equipment which operates a fluid pressure master cylinder by operation of either of two brake levers or both brake levers and performs a braking action using both front and rear brakes.

A first brake lever is formed in two pieces having a lever part and a pushing section arranged between the lever part and a cylinder body of the master cylinder. The lever part is connected by pivot to the pushing part such that when the rider carries out a gripping operation of the lever part, the lever part and the pushing part rotate around pivot and an action part of the pushing section pushes against a piston to push it into the cylinder body in order to increase the pressure of hydraulic fluid inside the cylinder body and a braking action is performed.

A brake cable is operably connected between the second brake lever and the ring at a tip of the pushing part of the first brake lever. In this way, if the second brake lever is gripped, the brake cable is pulled leftward towards the second brake lever which also rotates the pushing part around the pivot, thereby pushing against the piston in order to push into the cylinder body and pressurise the hydraulic fluid to the master cylinder to perform a braking action.

JP06-3221164 describes a handlebar of a motor cycle that is provided with right and left master cylinders. Each master cylinder is respectively controlled by right and left brake levers. A wire cable connects brake levers on either side of the handlebar such that if the left brake lever is grasped, then an arm of the left brake lever rocks and pulls the wire cable, wherein a right end engaging member of the wire cable is in contact with a hole of the arm member of the right hand brake lever, to thereby move the arm member of the right hand brake lever and achieve interlock braking. A further wire cable is provided between a hole of an arm member of the right brake lever and a hole of the arm member of the left brake lever. In this way, if the right brake lever is operated, the left brake lever will interlock via the wire cable.

The present invention has been made in view of the foregoing problem, and therefore has an object to provide a brake device with a reduced transmission loss of an operation force in the transmission path reaching a front wheel brake actuation mechanism from an interlock brake lever, and a straddle-type vehicle.

### SUMMARY OF THE INVENTION

Various aspects of the present invention are defined in independent claim 1. Some preferred features are defined in the dependent claims.

Described herein is a brake device including: a front wheel brake lever provided on one of handlebars; an interlock brake lever provided on the other of the handlebars and connected to a rear wheel brake; a front wheel brake actuation mechanism disposed on the other of the handlebars adjacent to the interlock brake lever to generate a fluid pressure in a hydraulic path connected to a front wheel brake by an operation force of the front wheel brake lever or the interlock brake lever to actuate the front wheel brake; and an operation force transmission member provided to extend from the one of the handlebars to the other thereof to transmit an operation force of the front wheel brake lever from the one of the handlebars to the other thereof before being input to the front wheel brake actuation mechanism.

Also described herein is a straddle-type vehicle including the above brake device.

Accordingly, it may be possible to realize a brake device with a reduced transmission loss in the transmission path for an operation force from the interlock brake lever to the front wheel brake actuation mechanism. The straddle-type vehicle may be, for example, a motorcycle (including a scooter), a four-wheeled buggy, or the like.

A play to delay transmission of the operation force from the interlock brake lever to the front wheel brake actuation mechanism may be provided between the interlock brake lever and the front wheel brake actuation mechanism. Accordingly, it is possible to actuate the rear wheel brake more quickly than the front wheel brake when the interlock brake lever is operated.

The front wheel brake actuation mechanism may include a master cylinder and an arm that receives the operation force of the front wheel brake lever or the interlock brake lever to press the master cylinder by the received operation force to generate a fluid pressure in the hydraulic path, and the arm is configured to be displaceable relative to the operation force transmission member when an operation force is input from the interlock brake lever to the arm. Accordingly, it is possible to suppress the transmission of an operation force of the interlock brake lever to the front wheel brake lever side.

The brake device may further include: a rear wheel brake cable for transmitting an operation force of the interlock brake lever to the rear wheel brake; and an input member that receives the operation force of the interlock brake lever to pull the rear wheel brake cable and to input the operation force to the front brake actuation mechanism, and the input member may be attached to the interlock brake lever.

The input member may be provided to be displaceable by a reaction force received from the front wheel brake actuation mechanism when the interlock brake lever is operated, and the rear wheel brake cable may suppress displacement of the input member against the reaction force received by the input member, so that the input member inputs the operation force of the interlock brake lever to the front wheel brake actuation mechanism against the reaction force in a state where the displacement of the input member is suppressed. According to this configuration, it may be possible to prevent an operation force of the interlock brake lever from being input from the input member to the front wheel brake lever actuation mechanism when the rear wheel brake cable is damaged.

The input member may have a supported part to be supported by the rear wheel brake cable and an operation force input part for inputting the operation force of the interlock brake lever to the front wheel brake actuation mechanism, and may be attached to the interlock brake lever so as to be rotationally displaceable. The supported part may be configured to suppress rotational displacement of the input member by being supported by the rear wheel brake cable, and a distance from a center of the rotational displacement of the input member to the operation force input part may be shorter than that from the center to the supported part. With this configuration, it may be possible to increase an operation force input from the interlock brake lever to the front wheel brake actuation mechanism via the input member.

The input member may be an equalizer, and the equalizer may have a rotation supported part to be supported for rotation by the interlock brake lever, a cable attached part provided at a position away from the rotation supported part to pull the rear wheel brake cable, and an operation force input section provided at a position away from the rotation supported part to input the operation force of the interlock brake lever to the front wheel brake actuation mechanism. Accordingly, it may be possible to divide with the equalizer an operation force of the interlock brake lever into a force to be input to the front wheel brake via the front wheel brake actuation mechanism and a force to be input to the rear wheel brake via the rear wheel brake cable, and to suppress changes in the division ratio. In this case, the rotation supported part of the input member may be provided between the operation force input section and the cable attached part.

The brake device may further include: an input member for inputting an operation force of the interlock brake lever to the front wheel brake actuation mechanism; and an urging member for applying to the front wheel brake actuation mechanism a force in a direction opposite to that in which the input member inputs the operation force of the interlock brake lever. Accordingly, it may be possible to delay transmission of an operation force of the interlock brake lever from the front wheel brake actuation mechanism to the front wheel brake, and to actuate the rear wheel brake earlier than the front wheel brake.

The operation force transmission member may be a rod extending from one of the handlebars to the other thereof. Since a rod does not elongate over time compared to a cable, length adjustment work by a user and a mechanism therefor may be unnecessary by adopting a rod as an operation force transmission member. Therefore, it may be possible to prevent the user from making inappropriate adjustment. For example, it may be possible to prevent the user from adjusting the operation force transmission member to such a length that a liquid pressure is always generated in the liquid path by the front wheel brake actuation mechanism.

The rod may be coupled to the front wheel brake actuation mechanism and a coupling part provided to the front wheel brake lever, and the rod may be provided with an adjustment mechanism for adjusting a distance between the front wheel brake actuation mechanism and the coupling part. According to this configuration, it is possible to set the appropriate distance between the coupling part and the front wheel brake actuation mechanism. In general, the front wheel brake lever is supported at a position away from the handlebars. It is possible to appropriately set the distance between the handlebars and the front wheel brake lever by adjusting the distance between the coupling part of the front wheel brake lever and the front wheel brake actuation mechanism.

Described herein is a brake device comprising:
a front wheel brake lever provided on a first side of a handlebar of a vehicle;
an interlock brake lever provided on a second side of the handlebar and connected to a rear wheel brake;
a front wheel brake actuation mechanism disposed on the second side of the handlebar adjacent to the interlock brake lever to generate a fluid pressure in a hydraulic path connected to a front wheel brake by an operation force of the front wheel brake lever or the interlock brake lever to actuate the front wheel brake; and
an operation force transmission member extending between the first and second sides of the handlebar and adapted to transmit an operation force of the front wheel brake lever to the front wheel brake actuation mechanism.

The first and second sides of the handlebar may be opposing sides of the handlebar. The first and second sides of the handlebar may comprise grip portions permitting a rider to grip the handlebar.

A play may be provided between the interlock brake lever and the front wheel brake actuation mechanism for delaying transmission of the operation force from the interlock brake lever to the front wheel brake actuation mechanism. The play may be provided by a lost-motion arrangement.

The front wheel brake actuation mechanism may include a master cylinder and an arm that receives the operation force of the front wheel brake lever or the interlock brake lever to press the master cylinder by the received operation force to generate a fluid pressure in the hydraulic path. The arm may be configured to be displaceable relative to the operation force transmission member when an operation force is input from the interlock brake lever to the arm.

The brake device may further comprise:
a rear wheel brake cable for transmitting an operation force of the interlock brake lever to the rear wheel brake; and
an input member that receives the operation force of the interlock brake lever to pull the rear wheel brake cable and to input the operation force to the front brake actuation mechanism,
wherein the input member is attached to the interlock brake lever.

The input member may be provided to be displaceable by a reaction force received from the front wheel brake actuation mechanism when the interlock brake lever is operated. The rear wheel brake cable may suppress displacement of the input member against the reaction force received by the input member, so that the input member inputs the operation force of the interlock brake lever to the front wheel brake actuation mechanism against the reaction force in a state where the displacement of the input member is suppressed.

The input member may comprise a supported part to be supported by the rear wheel brake cable, and an operation force input part for inputting the operation force of the interlock brake lever to the front wheel brake actuation mechanism. The input member may be attached to the interlock brake lever so as to be rotationally displaceable, and the supported part being configured to suppress rotational displacement of the input member by being supported by the rear wheel brake cable. A distance from a center of the rotational displacement of the input member to the operation force input part may be shorter than that from the center to the supported part.

The input member may comprise an equalizer. The equalizer may have a rotation supported part to be supported for rotation by the interlock brake lever, a cable attached part provided at a position away from the rotation supported part to pull the rear wheel brake cable, and an operation force input section provided at a position away from the rotation supported part to input the operation force of the interlock brake lever to the front wheel brake actuation mechanism.

The rotation supported part of the input member may be provided between the operation force input section and the cable attached part.

The brake device may further comprise:
an input member for inputting an operation force of the interlock brake lever to the front wheel brake actuation mechanism; and
an urging member for applying to the front wheel brake actuation mechanism a force in a direction opposite to that in which the input member inputs the operation force of the interlock brake lever.

The operation force transmission member may comprise a rod extending between the first and second sides of the handlebar.

The rod is coupled to the front wheel brake actuation mechanism and a coupling part provided to the front wheel brake lever. The rod may be provided with an adjustment mechanism for adjusting a distance between the front wheel brake actuation mechanism and the coupling part.

Alternatively, or additionally, the operation force transmission member may comprise a cable or the like.

### BRIEF DESCRIPTION OF THE DRAWINGS

These and other apsects of the present invention will now be described, by way of example only, with reference to the accompanying drawings, in which:
FIG. 1 is a side view of a motorcycle provided with a brake device in accordance with an embodiment of the present invention;
FIG. 2 is a front view of the motorcycle;
FIG. 3 is a schematic diagram showing the construction of the brake device;
FIG. 4 is a perspective view of an interlock brake lever and a front wheel brake actuation mechanism of the brake device as viewed from obliquely above;
FIG. 5 is a plan view of the interlock brake lever and the front wheel brake actuation mechanism of the brake device;
FIG. 6 is a bottom view of the interlock brake lever and the front wheel brake actuation mechanism of the brake device;
FIG. 7 is a perspective view of the interlock brake lever;
FIG. 8 is a perspective view of a master cylinder of the front wheel brake actuation mechanism;
FIG. 9 is a perspective view of a rotary member of the interlock brake lever;
FIG. 10 is a plan view of the rotary member;
FIG. 11 is a perspective view of an arm of the front wheel brake actuation mechanism;
FIG. 12 is a view for explaining the operation of the brake device when the interlock brake lever is operated;
FIG. 13 is a view for explaining the operation of the brake device when the interlock brake lever is operated;
FIG. 14 is a view showing how a pulled part of the arm moves relative to a pulling part of a transmission cable when the interlock brake lever is operated;
FIG. 15 is a view for explaining the operation of the brake device when the front wheel brake lever is operated;
FIG. 16 is a view for explaining the operation of the brake device when an inner cable of the rear wheel brake cable is released from the rotary member;
FIG. 17 is a plan view of a brake device in accordance with another embodiment of the present invention;
FIG. 18 is a plan view of a brake device in accordance with another embodiment of the present invention;
FIG. 19 is an exploded perspective view of an equalizer and an arm of the brake device shown in FIG. 18;
FIG. 20 is a plan view of the equalizer and the arm of the brake device shown in FIG. 18;
FIG. 21 is an enlarged view of the equalizer;
FIG. 22 is a perspective view of a master cylinder of the brake device shown in FIG. 18 as viewed from the front;
FIG. 23 is a front view of the base of the interlock brake lever;
FIG. 24 is a view for explaining the operation of the brake device when the interlock brake lever is operated;
FIG. 25 is a view for explaining the operation of the brake device when the interlock brake lever is further rotated from the state shown in FIG. 24;
FIG. 26 is a view for explaining the operation of the brake device when the front wheel brake lever is operated;
FIG. 27 is a view for explaining the operation of the brake device when the inner cable of the rear wheel brake cable is broken;
FIG. 28 is a view for explaining the operation of the brake device in the case where oil in a hydraulic path has leaked out;
FIG. 29 is a schematic diagram of a brake device in accordance with another embodiment of the present invention;
FIG. 30 is a cross sectional view taken along the line A-A of FIG. 29;
FIG. 31 is a cross sectional view taken along the line B-B of FIG. 29; and
FIG. 32 is a cross sectional view taken along the line C-C of FIG. 29.

### DETAILED DESCRIPTION OF THE DRAWINGS

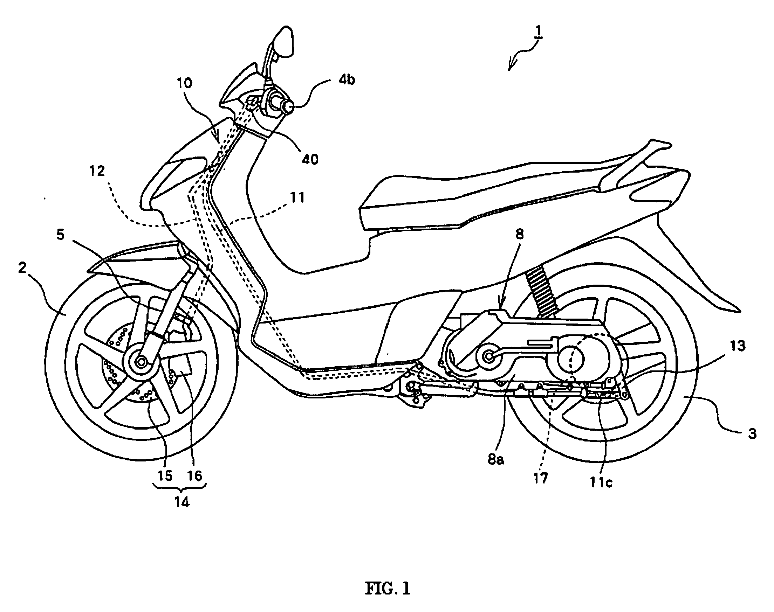

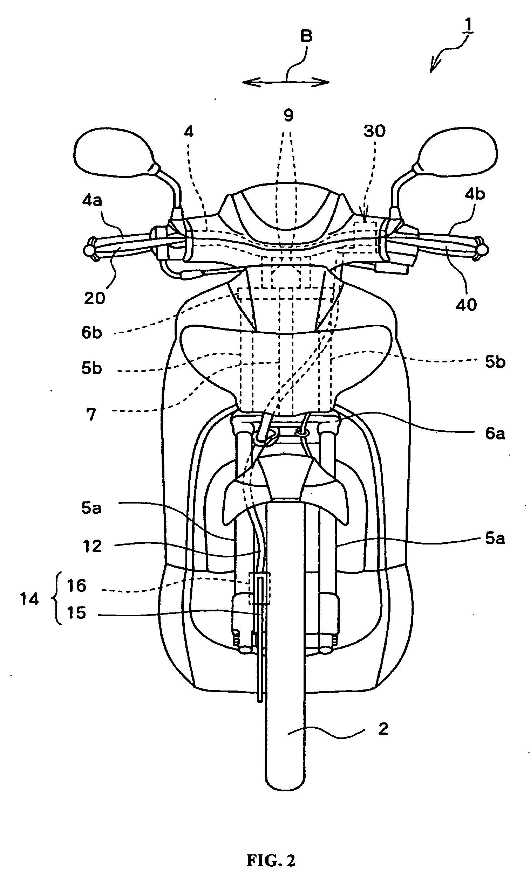

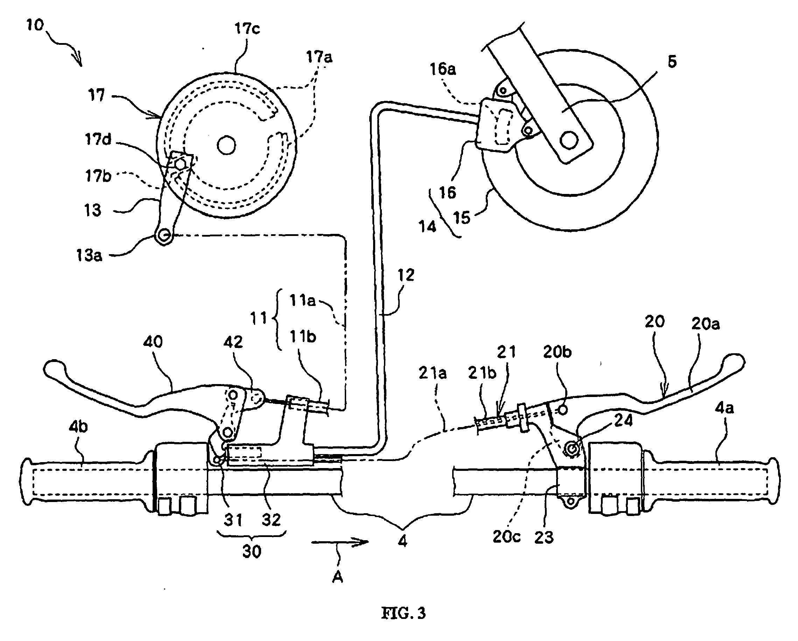

FIG. 1 is a side view of a motorcycle 1 provided with a brake device 10 as an embodiment of the present invention. FIG. 2 is a front view of the motorcycle 1. FIG. 3 is a schematic diagram showing the construction of the brake device 10.

As shown in FIG. 1 and FIG. 2, the motorcycle 1 includes the brake device 10, a front wheel 2, a rear wheel 3, handlebars 4, and an engine 8. As shown in FIG. 3, the brake device 10 includes a front wheel brake 14, a rear wheel brake 17, an interlock brake lever 40, a front wheel brake lever 20, a front wheel brake actuation mechanism 30 for actuating the front wheel brake 14 in response to an operation force of the interlock brake lever 40 and the front wheel brake lever 20, and a transmission cable 21 for transmitting an operation force of the front wheel brake lever 20 to the front wheel brake actuation mechanism 30.

The front wheel 2 is disposed at the front part of the motorcycle 1 and is supported to be rotatable by a pair of left and right front suspensions 5a, 5a. As shown in FIG. 2, an under bracket 6a is attached to the upper parts of the front suspensions 5a, 5a in such a manner as to extend across them. The lower end of a steering shaft 7 extending obliquely upward is attached to the under bracket 6a. A top bridge 6b is attached to the upper end of the steering shaft 7. The top bridge 6b extends across a pair of fork pipes 5b, 5b extending from the respective front suspensions 5a, 5a. The handlebars 4 extending in the left and right direction (in the direction B indicated in FIG. 2) are attached to the top bridge 6b via a pair of attachment members 9, 9. Grips 4a, 4b are attached to the ends of the left and right handlebars 4.

The engine 8 is a unit swing engine, for example, and is provided so as to be vertically pivotable together with the rear wheel 3 disposed at the rear part of the motorcycle 1, as shown in FIG. 1. A driving force transmission mechanism 8a for transmitting a driving force output from the engine 8 to the rear wheel 3 is disposed at the rear of the engine 8. The rear wheel brake 17 is disposed on the inner side, in the vehicle width direction, of the rear part of the driving force transmission mechanism 8a.

In the example described here, the rear wheel brake 17 is a mechanical drum brake. As shown in FIG. 3, the rear wheel brake 17 includes a brake drum 17c that rotates together with the rear wheel 3, and a pair of brake shoes 17a, 17a disposed inside the brake drum 17c. A cam 17b supported for rotation is disposed between the pair of brake shoes 17a, 17a. A rotary shaft 17d of the cam 17b is attached to an end of a link member 13. The other end 13a of the link member 13 is connected to the interlock brake lever 40 via a rear wheel brake cable 11.

When the interlock brake lever 40 is operated by a rider by rotation toward the grip 4b (toward the rider), the interlock brake lever 40 pulls the rear wheel brake cable 11. As the rear wheel brake cable 11 is pulled, the link member 13 rotates about the rotary shaft 17d of the cam 17b. With this rotation, the cam 17b presses the pair of brake shoes 17a, 17a against the inner wall of the brake drum 17c rotating together with the rear wheel 3, generating a friction force to establish braking of the rear wheel 3.

The rear wheel brake cable 11 is made up of an inner cable 11a constituted of a wire or the like, and an outer cable 11b for covering the inner cable 11a. As shown in FIG. 1, the rear wheel brake cable 11 extends downward from the interlock brake lever 40 positioned in front of the grip 4b, and then extends rearward at the lower part of the motorcycle 1. The rear end of the inner cable 11a is attached to the link member 13. A coil spring 11c for pulling the inner cable 11a toward the rear wheel brake 17 is provided at the rear end of the rear wheel brake cable 11.

In the example described here, the front wheel brake 14 is a hydraulic disc brake, and includes a brake disc 15 and a caliper 16. The brake disc 15 is supported by the lower end of the front suspension 5a so as to be rotatable together with the front wheel 2. The caliper 16 includes an internally mounted brake pad 16a (see FIG. 3). The brake pad 16a is pressed against the brake disc 15 by a hydraulic pressure transmitted via a hydraulic path 12 so as to generate a braking force for the front wheel 2. The hydraulic path 12 includes a hydraulic hose or pipe, for example. The hydraulic path 12 is connected to a master cylinder 32 to be described later, and transmits a hydraulic pressure generated in the master cylinder 32 to the front wheel brake 14 by an operation of the interlock brake lever 40 or the front wheel brake lever 20.

As shown in FIG. 3, the front wheel brake lever 20 is provided on the right handlebar 4 and positioned in front of the grip 4a. The front wheel brake lever 20 is attached to the handlebar 4 and supported to be rotatable by an attachment member 23.

Specifically, a rotation supported part 20c is formed at the base of the front wheel brake lever 20 (on the center side in the vehicle width direction). The rotation supported part 20c and the attachment member 23 are each provided with a hole at the corresponding position. A journal member (for example, a bolt) 24 is inserted through each hole of these components. In this way, the front wheel brake lever 20 is rotatable about the journal member 24.

The front wheel brake lever 20 has a grasped part 20a extending in the horizontal direction to be grasped by the rider when a brake operation is performed. A cable attached part 20b is provided at the base of the grasped part 20a. One end of the transmission cable 21 is attached to the cable attached part 20b. The transmission cable 21 is provided to extend from the right to the left handlebar 4. The transmission cable 21 transmits an operation force of the front wheel brake lever 20 from the right to the left handlebar 4 to input the operation force to the front wheel brake actuation mechanism 30. The rotation supported part 20c described above is formed to project from the cable attached part 20b toward the grip 4a.

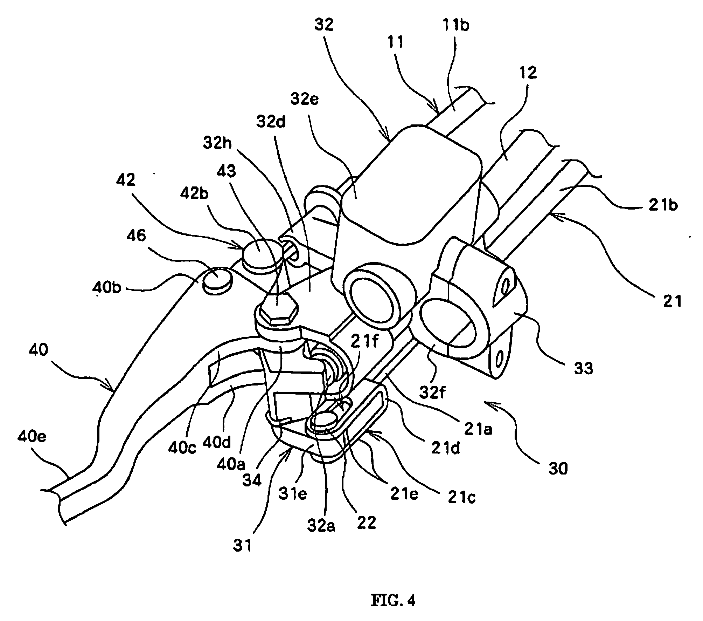

The interlock brake lever 40 and the front wheel brake actuation mechanism 30 will now be described. As shown in FIG. 3, the interlock brake lever 40 is provided on the left handlebar 4 and is positioned in front of the grip 4b. In the example described here, the interlock brake lever 40 is attached to the handlebar 4 via the master cylinder 32 of the front wheel brake actuation mechanism 30 and supported for rotation by the master cylinder 32 (see FIG. 4). The front wheel brake actuation mechanism 30 includes the master cylinder 32 and an arm 31 made of a rigid material (for example, a metal). When an operation force of the front wheel brake lever 20 or the interlock brake lever 40 is received, the arm 31 presses the master cylinder 32 by the received operation force to generate a hydraulic pressure in the hydraulic path 12 to actuate the front wheel brake 14.

A rotary member 42 made of a rigid material (for example, a metal) is attached to the interlock brake lever 40. The rotary member 42 is provided so as to be rotationally displaceable, or retractable, in response to a reaction force received from the arm 31 when the interlock brake lever 40 is operated. The rotary member 42 will be described in detail later.

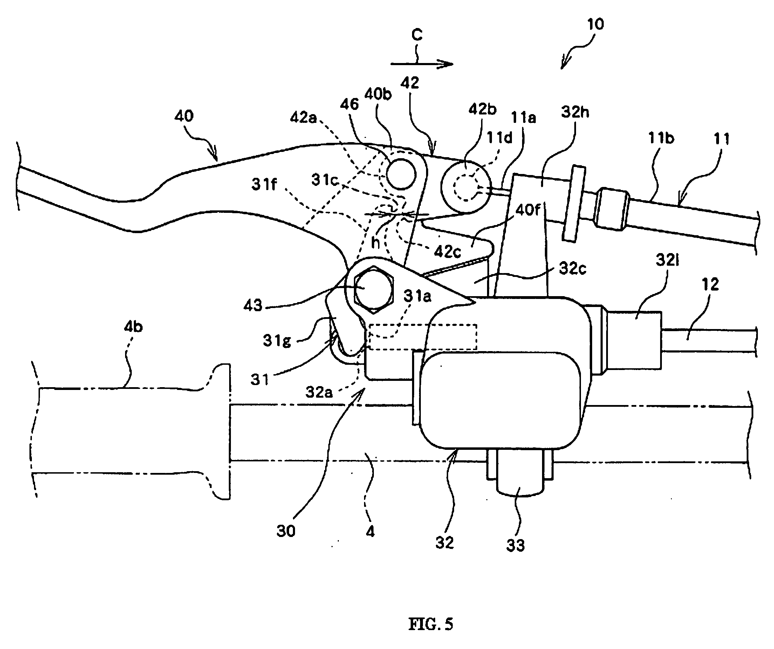

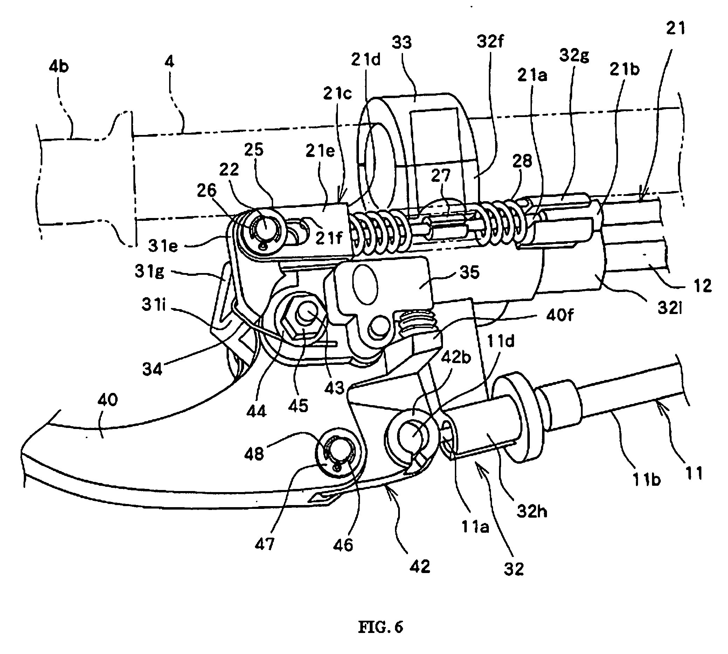

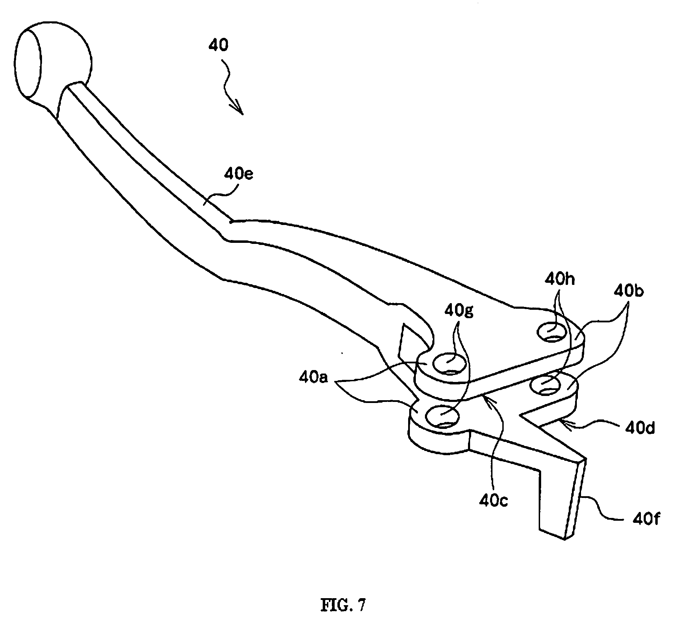

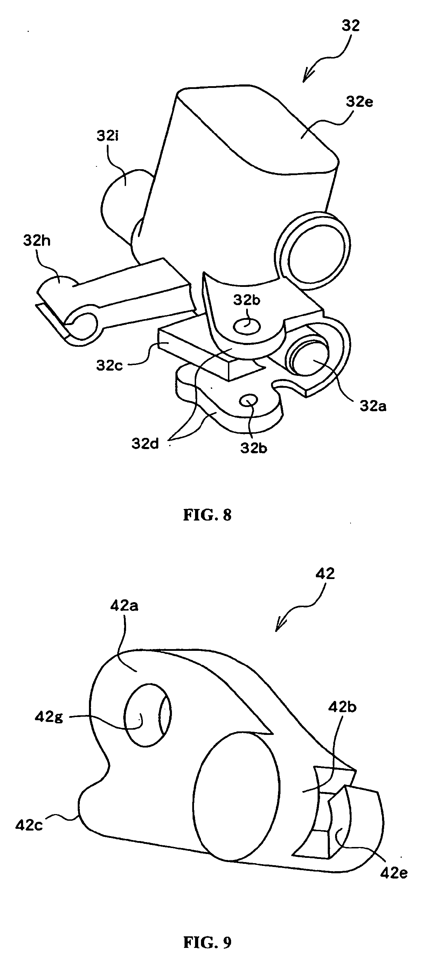

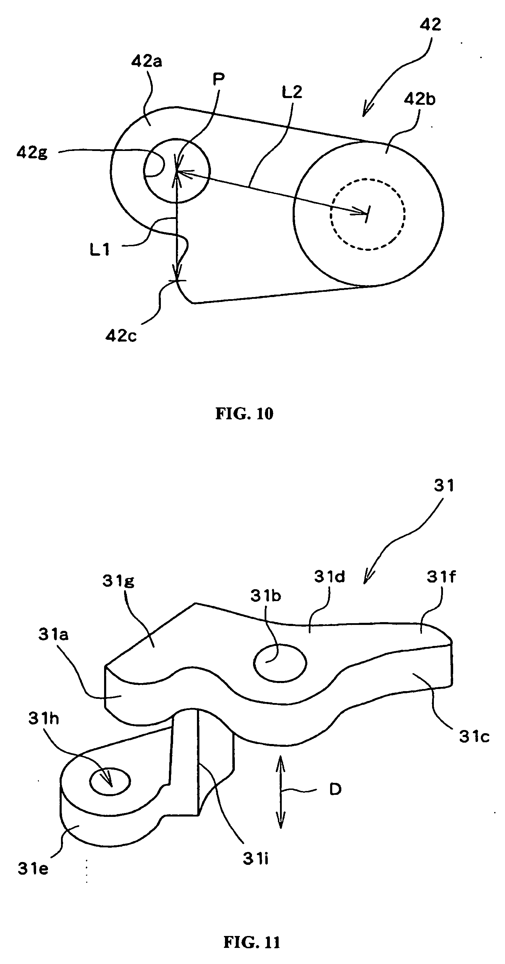

FIG. 4 is a perspective view of the interlock brake lever 40 and the front wheel brake actuation mechanism 30 as viewed from obliquely above. FIG. 5 is a plan view of the interlock brake lever 40 and the front wheel brake actuation mechanism 30. FIG. 6 is a bottom view of the interlock brake lever 40 and the front wheel brake actuation mechanism 30. FIG. 7 is a perspective view of the interlock brake lever 40. FIG. 8 is a perspective view of the master cylinder 32. FIG. 9 is a perspective view of the rotary member 42. FIG. 10 is a plan view of the rotary member 42. The handlebar 4 and the grip 4b are not shown in FIG. 4, while they are shown by the chain double dashed line in FIG. 5 and FIG. 6.

First, the interlock brake lever 40 is described in detail. As shown in FIG. 7, the interlock brake lever 40 has a grasped part 40e extending in the horizontal direction to be grasped by the rider when a brake operation is performed. A pair of upper and lower plate-like bases 40c, 40d are provided at the end of the grasped part 40e on the center side in the vehicle width direction. The bases 40c, 40d have respective rotation supported parts 40a, 40a, which are formed with respective holes 40g, 40g at positions corresponding to each other. As shown in FIG. 8, the master cylinder 32 is formed with holes 32b, 32b, and the positions of the holes 32b, 32b correspond to those of the holes 40g, 40g. A journal member (here, a bolt) 43 is inserted through the holes 32b, 32b and the holes 40g, 40g (see FIG. 4 or FIG. 6). In this way, the interlock brake lever 40 is rotatable about the journal member 43. As shown in FIG. 6, a nut 44 is fitted at the distal end of the journal member 43 via or against a washer 45.

As shown in FIG. 7, the bases 40c, 40d have respective rotation supporting parts 40b, 40b for supporting the rotary member 42 for rotation. The rotation supporting parts 40b, 40b are positioned in front of (in the direction away from the handlebar 4) the respective rotation supported parts 40a, 40a. Specifically, the rotation supporting parts 40b, 40b are also formed with respective holes 40h, 40h at positions facing each other. The rotary member 42 is also formed with a hole 42g at a position corresponding to the holes 40h, 40h (see FIG. 9). As shown in FIG. 4, the rotary member 42 is disposed between the pair of upper and lower bases 40c, 40d, and a journal member (here, a bolt) 46 is inserted through the hole 42g of the rotary member 42 and the holes 40h, 40h. In this way, the rotation supporting parts 40b, 40b supports the rotary member 42 for rotation. As shown in FIG. 6, a washer 47 is fitted at the distal end of the journal member 46 and a retaining member (here a split pin) 48 is inserted through the distal end of the journal member 46 to secure the journal member 46 to the interlock brake lever 40.

As shown in FIG. 6 or FIG. 7, the base 40d is provided with a stopper 40f projecting downward. On the other hand, as shown in FIG. 5 or FIG. 8, the master cylinder 32 is provided with a rotation restriction part 32c projecting forward, and the rotation restriction part 32c is positioned at a position corresponding to the stopper 40f of the interlock brake lever 40 in the non-operation state (in the state where the interlock brake lever 40 is not operated to rotate). The rotation restriction part 32c restricts rotation of the interlock brake lever 40 by contacting the stopper 40f in the state where the interlock brake lever 40 is not operated.

The rotary member 42 is described next. As shown in FIG. 5 or FIG. 9, the rotary member 42 is disposed to extend from the rotation supporting part 40b toward the center of the vehicle width direction (in the direction C in FIG. 5), and has a rotation supported part 42a, a cable attached part 42b, and an arm pressing part 42c.

The rotation supported part 42a is positioned at one end of the rotary member 42, and formed with the hole 42g described above.

The cable attached part 42b is provided at a position away from the rotation supported part 42a toward the center of the vehicle width direction. One end of the rear wheel brake cable 11 is attached to the cable attached part 42b. In the example described here, as shown in FIG. 6, a cylindrical engagement part 11d is provided at the corresponding end of the inner cable 11a. On the other hand, a recess for accommodating the cylindrical engagement part 11d is formed in the cable attached part 42b, allowing the engagement part 11d and the cable attached part 42b to be engaged with each other. As shown in FIG. 9, a notch 42e is formed in the cable attached part 42b. The inner cable 11a extends toward the center of the vehicle width direction through the notch 42e.

The arm pressing part 42c is formed at a position facing a lever-side pressed part 31c of the arm 31 to be described later. In the example described here, as shown in FIG. 5, the arm pressing part 42c is formed to project from the rotation supported part 42a toward the grip 4b.

As described above, the rotary member 42 is provided rotatably about the journal member 46. The rear wheel brake cable 11 regulates rotation (retraction) of the rotary member 42 against a reaction force received from the arm 31 by the rotary member 42 when the interlock brake lever 40 is operated. The rotary member 42 inputs an operation force of the interlock brake lever 40 to the arm 31 against the reaction force in the state where the rotation of the rotary member 42 is regulated. That is, the cable attached part 42b is pulled by the inner cable 11a toward the center of the vehicle width direction, regulating rotation of the rotary member 42. When the interlock brake lever 40 is operated, the rotary member 42 is supported on the arm 31 side by the inner cable 11a, and the arm pressing part 42c inputs an operation force of the interlock brake lever 40 to the arm 31 against the reaction force received from the arm 31.

As shown in FIG. 10, the distance L1 from the center P of the hole 42g formed in the rotation supported part 42a to the arm pressing part 42c is shorter than the distance L2 from the center P to the cable attached part 42b. With this configuration, the force input from the rotary member 42 to the arm 31 can be increased.

The front wheel brake actuation mechanism 30 is described next. As shown in FIG. 2 and FIG. 3, the front wheel brake actuation mechanism 30 is disposed adjacent to the interlock brake lever 40 on the left handlebar 4 (on one of the handlebars 4 where the interlock brake lever 40 is provided). That is, the front wheel brake actuation mechanism 30 is provided on the inner side (in the direction A indicated in FIG. 3), in the vehicle width direction, of the interlock brake lever 40. As described above, the front wheel brake actuation mechanism 30 includes the arm 31 and the master cylinder 32. FIG. 11 is a perspective view of the arm 31.

As shown in FIG. 4 or FIG. 8, the master cylinder 32 has a pressed part 32a, an attachment part 32f, and a pair of upper and lower lever supporting parts 32d, 32d.

The attachment part 32f has a semicircular shape. The attachment part 32f and an attachment member 33, which also has a semicircular shape, hold therebetween a part of the handlebar 4 on the inner side of the grip 4b. In this way, the master cylinder 32 may be attached to the handlebar 4 (see FIG. 5 or FIG. 6).

When a brake operation is performed by the rider, the pressed part 32a is pressed by a cylinder pressing part 31a of the arm 31, which is described later, to press a piston (not shown) accommodated in the master cylinder 32. Then, the pressed part 32a increases the hydraulic pressure of brake oil in the hydraulic path 12 to actuate the front wheel brake 14. In the example described here, the end surface of the pressed part 32a faces laterally in the vehicle width direction (in the direction opposite to the direction A indicated in FIG. 3), so that the end surface of the pressed part 32a faces the cylinder pressing part 31a of the arm 31 (see FIG. 5). The pressed part 32a is urged laterally in the vehicle width direction by a spring (not shown) accommodated in the master cylinder 32.

The lever supporting parts 32d, 32d support the interlock brake lever 40 and the arm 31 for rotation. In the example described here, a rotation supported part 31d of the arm 31 to be described later is disposed between the rotation supported parts 40a, 40a of the interlock brake lever 40 (See FIG. 11), which are disposed between the pair of upper and lower lever supporting parts 32d, 32d. The lever supporting parts 32d, 32d are formed with the respective holes 32b, 32b described above (see FIG. 8). The journal member 43 is inserted through the holes 32b, 32b, the holes 40g, 40g of the interlock brake lever 40, and a hole 31b of the arm 31 to be described later. In this way, the interlock brake lever 40 and the arm 31 are supported for rotation by the lever supporting parts 32d, 32d. The washer 44 and the nut 45 are fitted at an end of the journal member 43 (see FIG. 6).

As shown in FIG. 8, the master cylinder 32 has a reservoir tank 32e, a transmission cable supporting part 32g (see FIG. 6), a rear wheel brake cable supporting part 32h, and a hydraulic path coupling part 32i, in addition to the pressed part 32a and so forth described above.

The reservoir tank 32e is provided at the upper part of the master cylinder 32 to reserve brake oil for replenishment. The reservoir tank 32e supplies brake oil to the hydraulic path 12 when the brake pad 16a is worn, for example. The transmission cable supporting part 32g is formed at the lower part of the master cylinder 32 to hold an end of an outer cable 21b of the transmission cable 21 (see FIG. 6) . The rear wheel brake cable supporting part 32h holds an end of the outer cable 11b of the rear wheel brake cable 11. The hydraulic path 12 is connected to the hydraulic path coupling part 32i (see FIG. 6) .

As shown in FIG. 6, a stop lamp switch 35 connected to a stop lamp of the motorcycle 1 via a lead wire (not shown) is attached to the lower surface of the master cylinder 32. The stop lamp switch 35 is turned off when the interlock brake lever 40 is not operated and the stop lamp switch 35 is pressed by the stopper 40f of the interlock brake lever 40, and turned on when a brake operation is performed by the rider and the stop lamp switch 35 is apart from the stopper 40f.

The arm 31 is described next. As shown in FIG. 11, the arm 31 is formed with the cylinder pressing part 31a, the rotation supported part 31d, the lever-side pressed part 31c, and a pulled part 31e.

The hole 31b is formed at the center of the rotation supported part 31d, and the journal member 43 is inserted through the hole 31b as described above. When an operation force is input from the interlock brake lever 40 or the front wheel brake lever 20, the arm 31 rotates about the journal member 43 for the cylinder pressing part 31a to press the pressed part 32a of the master cylinder 32.

The arm 31 has a swelling or protruding part 31f extending laterally from the rotation supported part 31d. A side of the swelling part 31f faces the arm pressing part 42c of the rotary member 42, and serves as the lever-side pressed part 31c (see FIG. 5).

A play or lost-motion arrangement for delaying the transmission of an operation force from the interlock brake lever 40 to the brake actuation mechanism 30 is provided between the interlock brake lever 40 and the arm 31. In this example, as shown in FIG. 5, a gap h is provided as the play between the lever-side pressed part 31c and the arm pressing part 42c of the rotary member 42 when the interlock brake lever 40 is in the non-operational state.

The cylinder pressing part 31a is provided on the side opposite to the lever-side pressed part 31c across the rotation supported part 31d. Specifically, the arm 31 has a swelling or protruding part 31g swelling or protruding laterally from the rotation supported part 31d, and the cylinder pressing part 31a is provided at a side of the swelling part 31g facing the pressed part 32a of the master cylinder 32. The distance from the center of the hole 31b to the cylinder pressing part 31a is shorter than that from the center of the hole 31b to the lever-side pressed part 31c. The swelling part 31f, the rotation supported part 31d, and the swelling part 31g constitute a thick plate.

The pulled part 31e is provided at a position spaced apart from the swelling part 31f, the rotation supported part 31d, and the swelling part 31g in the vertical direction (in the direction D indicated in FIG. 11), and faces the swelling part 31g in the vertical direction.

A pulling part 21c provided at an end of the inner cable 21a of the transmission cable 21 is retained by the pulled part 31e (see FIG. 4). The pulling part 21c is configured to pull the pulled part 31e to transmit the movement of the front wheel brake lever 20 to the front wheel brake actuation mechanism 30 when the front wheel brake lever 20 is operated, and to be distanced from the pulled part 31e not to transmit the movement of interlock brake lever 40 to the front wheel brake lever 20 when the interlock brake lever 40 is operated.

Specifically, as shown in FIG. 4, the pulling part 21c has a base 21d and a pair of plates 21e, 21e extending perpendicularly from the base 21d. The plates 21e, 21e are formed with respective holes 21f, 21f elongated in the moving direction of the pulled part 31e when the interlock brake lever 40 is operated (see FIG. 4 and FIG. 6). On the other hand, as shown in FIG. 11, a hole 31h is formed at the center of the pulled part 31e. The pulled part 31e is disposed between the pair of plates 21e, 21e, and a pin 22 is inserted through the hole 31h and the holes 21f, 21f. The pulled part 31e is in engagement with the pulling part 21c by the pin 22. In this way, the arm 31 can be displaced relative to the transmission cable 21 when an operation force is input from the interlock brake lever 40 to the arm 31 (when the interlock brake lever 40 is operated) . That is, the pulled part 31e moves, together with the pin 22, relative to the inner cable 21a in the space between the plates 21e, 21e. In this way, movement of the interlock brake lever 40 is not transmitted to the front wheel brake lever 20 even in the case where the interlock brake lever 40 is operated.

As shown in FIG. 6, a washer 25 is fitted at the distal end of the pin 22. A retaining member (here, a split pin) 26 is inserted through the distal end of the pin 22 on the outer side of the washer 25. The retaining member 26 prevents the pin 22 from slipping off from the pulling part 21c. A coil spring 28 is disposed between the base 21d of the pulling part 21c and the transmission cable supporting part 32g. The coil spring 28 applies a force in the direction of increasing the distance between the base 21d and the transmission cable supporting part 32g. The coil spring 28 is disposed to encircle the inner cable 21a. A tube 27 with an outer diameter equivalent to the inner diameter of the coil spring 28 is attached to the inner cable 21a. The tube 27 stabilizes the position of the coil spring 28 relative to the inner cable 21a to prevent the coil spring 28 from rattling.

As shown in FIG. 11, the pulled part 31e and the swelling part 31g are coupled by a column 31i extending in the vertical direction. The arm 31 is always urged such that the cylinder pressing part 31a is in contact with the pressed part 32a of the master cylinder 32. In the example described here, as shown in FIG. 6, a torsion spring 34 is provided to extend across the column 31i and the journal member 43 to pull the column 31i toward the master cylinder 32.

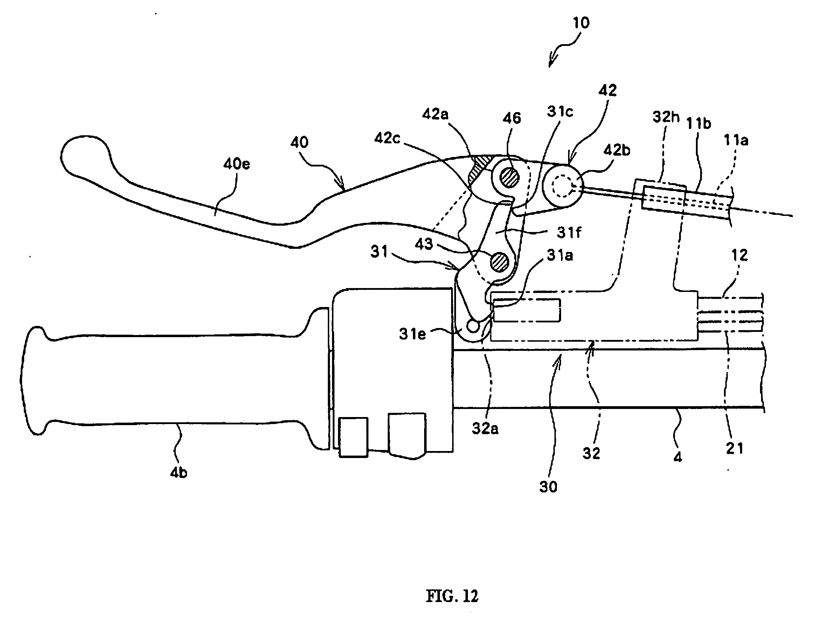

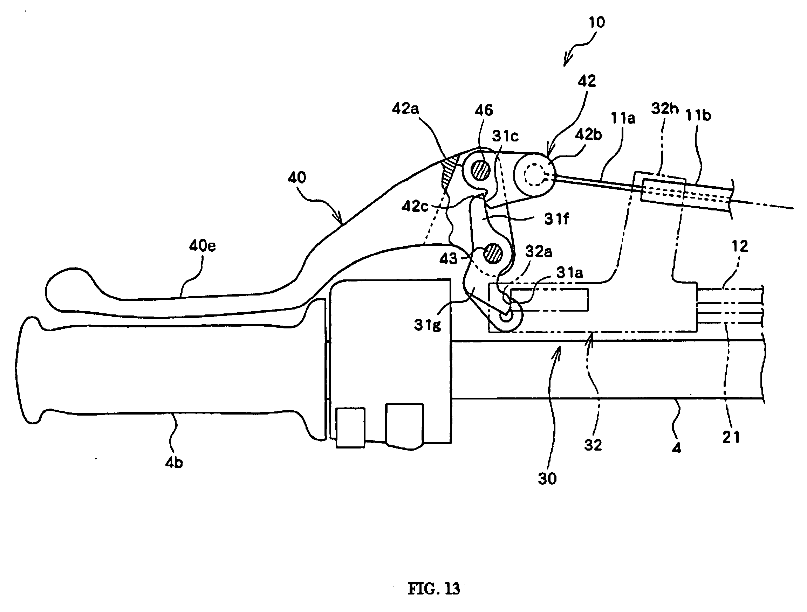

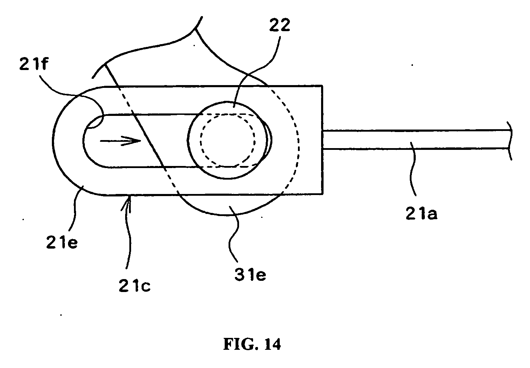

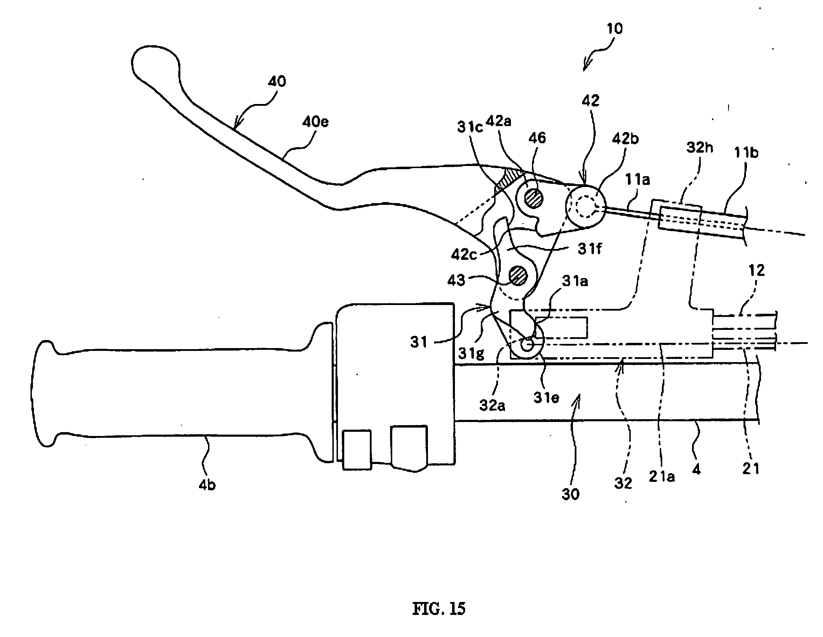

The operation of the brake device 10 will now be described. FIG. 12 and FIG. 13 are views for explaining the operation of the brake device 10 when the interlock brake lever 40 is operated. FIG. 14 is a view showing how the pulled part 31e of the arm 31 moves between the plates 21e, 21e of the transmission cable 21 at that time. FIG. 15 is a view for explaining the operation of the brake device 10 when the front wheel brake lever 20 is operated. First, a description is made of the operation of the brake device 10 when the interlock brake lever 40 is operated.

As described above, in the initial state (in the state where a brake operation is not performed) as shown in FIG. 5, the arm pressing part 42c of the rotary member 42 is distanced from the lever-side pressed part 31c of the arm 31 by the gap h.

When the rider starts operating the interlock brake lever 40 as shown in FIG. 12, the interlock brake lever 40 starts rotating about the journal member 43 toward the grip 4b. As a result, the inner cable 11a of the rear wheel brake cable 11 is pulled by the rotary member 42 to start actuation of the rear wheel brake 17. At this time, the arm pressing part 42c of the rotary member 42 and the lever-side pressed part 31c of the arm 31 initially contact each other; therefore, the arm 31 has not been rotated, and actuation of the front wheel brake 14 has not yet been started.

After that, when the rider further operates the interlock brake lever 40, and the interlock brake lever 40 rotates about the journal member 43 toward the grip 4b as shown in FIG. 13, the arm pressing part 42c of the rotary member 42 presses the lever-side pressed part 31c of the arm 31. As a result, the arm 31 also rotates about the journal member 43, and the cylinder pressing part 31a presses the pressed part 32a of the master cylinder 32. In this way, the front wheel brake 14 starts being actuated.

At this time, the pin 22 moves along the holes 21f, 21f formed in the plates 21e, 21e of the transmission cable 21 as shown in FIG. 14, allowing the pulled part 31e of the arm 31 to move between the plates 21e, 21e of the transmission cable 21 without changing the position of the pulling part 21c. This prevents an operation of the interlock brake lever 40 from being transmitted to the front wheel brake lever 20 when the interlock brake lever 40 is operated.

As described above, the distance L1 from the center P of the rotational displacement of the rotary member 42 to the arm pressing part 42c is shorter than the distance L2 from the center P to the cable attached part 42b (see FIG. 10). With this configuration, a pressing force applied by the arm pressing part 42c to the lever-side pressed part 31c is increased, allowing to rotate the arm 31 against a reaction force received from the lever-side pressed part 31c without greatly rotating (retracting) the rotary member 42.

A description will now be made of the operation of the brake device 10 when the front wheel brake lever 20 is operated.

When the rider operates the front wheel brake lever 20, the front wheel brake lever 20 pulls the transmission cable 21, and the pulling part 21c pulls the pulled part 31e of the arm 31. As a result, as shown in FIG. 15, the arm 31 rotates about the journal member 43, and the cylinder pressing part 31a presses the pressed part 32a of the master cylinder 32. In this way, the front wheel brake 14 is actuated. At this time, the arm pressing part 42c of the rotary member 42 and the lever-side pressed part 31c of the arm 31 are more distanced from each other than in the initial state.

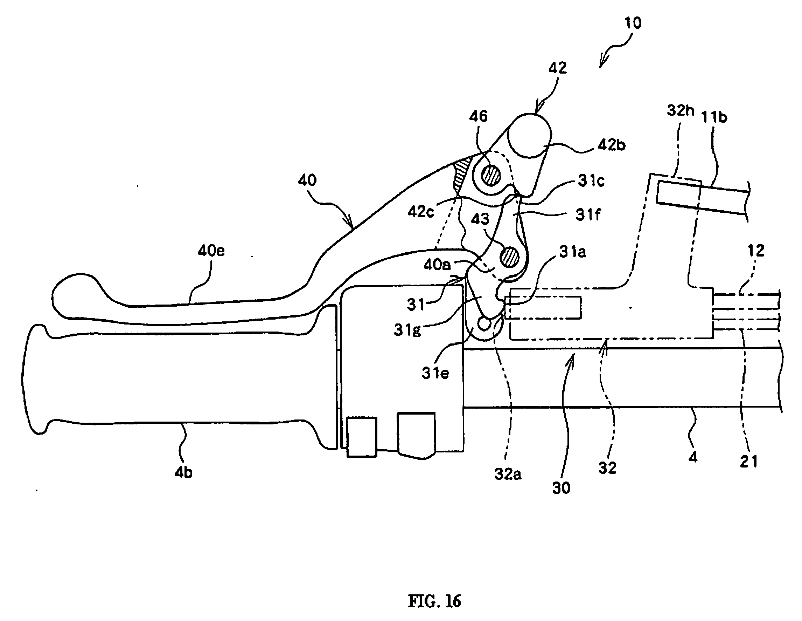

Finally, a description will now be made of the operation of the brake device 10 when the inner cable 11a of the rear wheel brake cable 11 is cut or released from the rotary member 42. FIG. 16 is a view for explaining the operation of the brake device 10 when the inner cable 11a is released from the rotary member 42.

When the rider operates the interlock brake lever 40 in the state where the inner cable 11a is released from the rotary member 42, the interlock brake lever 40 rotates about the journal member 43 toward the grip 4b as shown in FIG. 16. At this time, the arm pressing part 42c of the rotary member 42 is in contact with the lever-side pressed part 31c of the arm 31. However, the rotary member 42 rotates (retracts) about the journal member 46, and therefore the arm pressing part 42c of the rotary member 42 cannot press the lever-side pressed part 31c against the expansion force of the spring accommodated in the master cylinder 32. This prevents actuation of only the front wheel brake 14 when the interlock brake lever 40 is operated in the state where the inner cable 11a is released from the rotary member 42.

In the brake device 10 described above, the front wheel brake actuation mechanism 30 is disposed adjacent to the interlock brake lever 40. Therefore, it is possible to reduce the transmission loss of an operation force in the transmission path where an operation force reaches from the interlock brake lever 40 to the front wheel brake actuation mechanism 30, compared to the case where the interlock brake lever and the front wheel brake actuation mechanism are disposed apart from each other and where an operation of the interlock brake lever is transmitted to the front wheel brake actuation mechanism via a wire or the like.

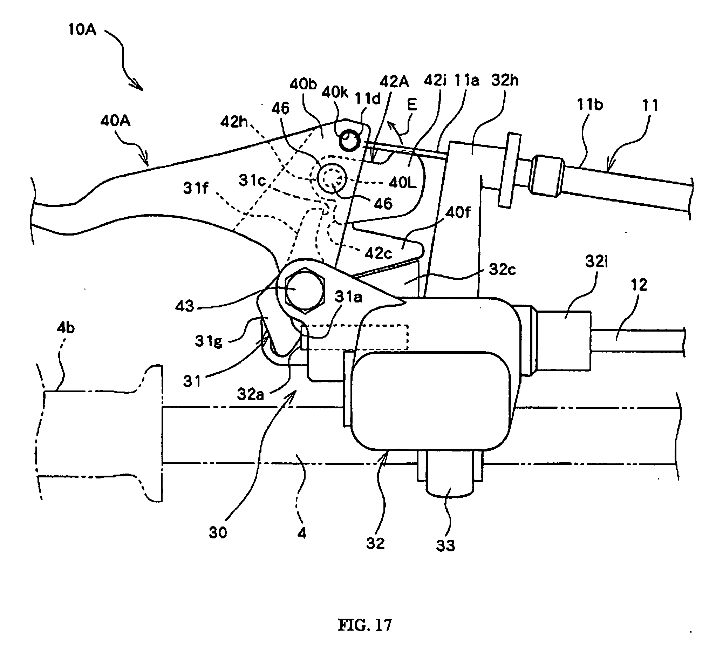

The present invention is not limited to the brake device 10 described above, and various modifications may be made thereto. In the above description, for example, the rear wheel brake cable 11 is connected to the interlock brake lever 40 via the rotary member 42. However, the rear wheel brake cable may be connected directly to the interlock brake lever. FIG. 17 is a plan view of a brake device 10A as an example of the brake device in accordance with this embodiment. In FIG. 17, similar parts to those described above are given similar reference numerals and will not be described again.

The brake device 10A includes an interlock brake lever 40A and a rotary member 42A. The interlock brake lever 40A includes a cable attachment part 40k, by which the engagement part 11d of the rear wheel brake cable 11 is retained. A tension force by the coil spring 11c is acting on the inner cable 11a of the rear wheel brake cable 11 (see FIG. 1). The interlock brake lever 40A has a rotation supporting part 40L. The rotation supporting part 40L is positioned between the cable attachment part 40k and the lever-side pressed part 31c of the arm 31, and supports the rotary member 42A for rotation. Here, the rotary member 42A has a rotation supported part 42h, and the journal member (for example, a bolt) 46 is inserted through the rotation supported part 42h and the rotation supporting part 40L of the interlock brake lever 40A. The rotary member 42A also has a cable-side supported part 42i. The cable-side supported part 42i is in contact with the inner cable 11a on which the tension force is acting. This restricts rotation (retraction) of the rotary member 42A in the direction opposite to the side where the arm 31 is positioned.

The operation of the brake device 10A is described. When the interlock brake lever 40A is operated by a rider toward the grip 4b, the arm pressing part 42c of the rotary member 42A presses the lever-side pressed part 31c of the arm 31, and receives a reaction force from the lever-side pressed part 31c. The inner cable 11a of the rear wheel brake cable 11 is in contact with the cable-side supported part 42i, and supports the rotary member 42A on the lever-side pressed part 31c side against the reaction force received by the rotary member 42A from the arm 31. Since the rotary member 42A is supported by the inner cable 11a, the rotary member 42A presses the lever-side pressed part 31c without rotating in the opposite direction (in the direction E in FIG. 17), and inputs the operation force of the interlock brake lever 40A to the arm 31.

A description will now be made of the operation of the brake device 10A in the state where the inner cable 11a is disconnected. In the state where the inner cable 11a is disconnected, rotation of the rotary member 42A in the direction opposite to the side where the arm 31 is positioned is allowed. As a result, as in the case described with reference to FIG. 16, when the interlock brake lever 40A is rotated toward the rider, the arm pressing part 42c of the rotary member 42A receives a reaction force from the lever-side pressed part 31c of the arm 31, and the rotary member 42A cannot resist the reaction force but is rotated in the direction opposite to the lever-side pressed part 31c (in the direction E in FIG. 17). In this way, it is possible to prevent actuation of only the front wheel brake 14 in the case where the interlock brake lever 40A is operated while the inner cable 11a is disconnected. The operation of the brake device 10A has been described above.

In the brake device 10 described above, a gap h is provided between the lever-side pressed part 31c of the arm 31 and the arm pressing part 42c of the rotary member 42 (see FIG. 5). This gap delays the start of the actuation of the front wheel brake 14 relative to the actuation of the rear wheel brake 17 when the interlock brake lever 40 is operated. However, the mechanism to delay the actuation of the front wheel brake 14 is not limited thereto. For example, a force in the direction opposite to that in which the arm 31 is moved by an operation of the interlock brake lever 40 may be applied to the arm 31 in advance to delay the actuation of the front wheel brake 14.

In the brake device 10 described above, the rotary member 42 is used as a member to input an operation force of the interlock brake lever 40 to the arm 31. However, an equalizer may be used as a member to input an operation force of the interlock brake lever 40 to the arm 31.

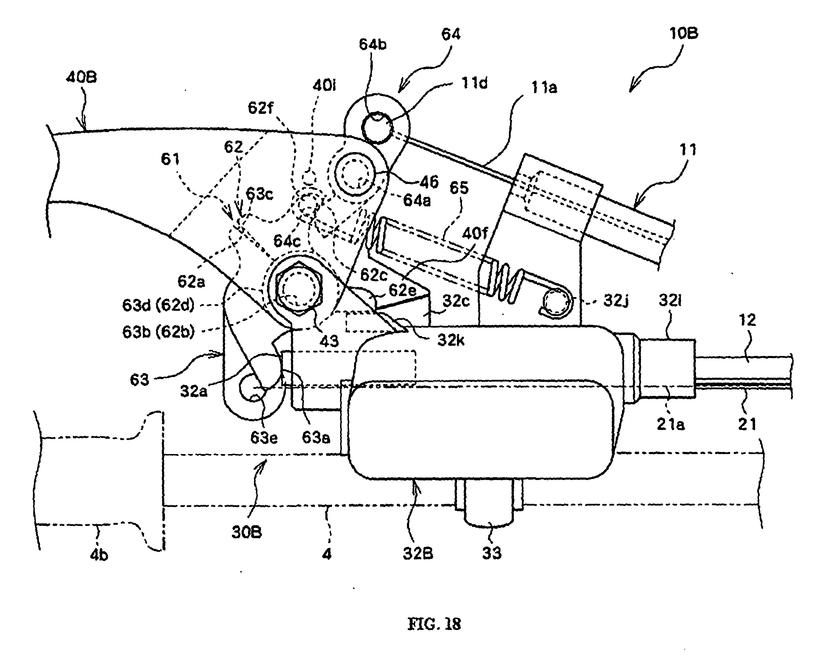

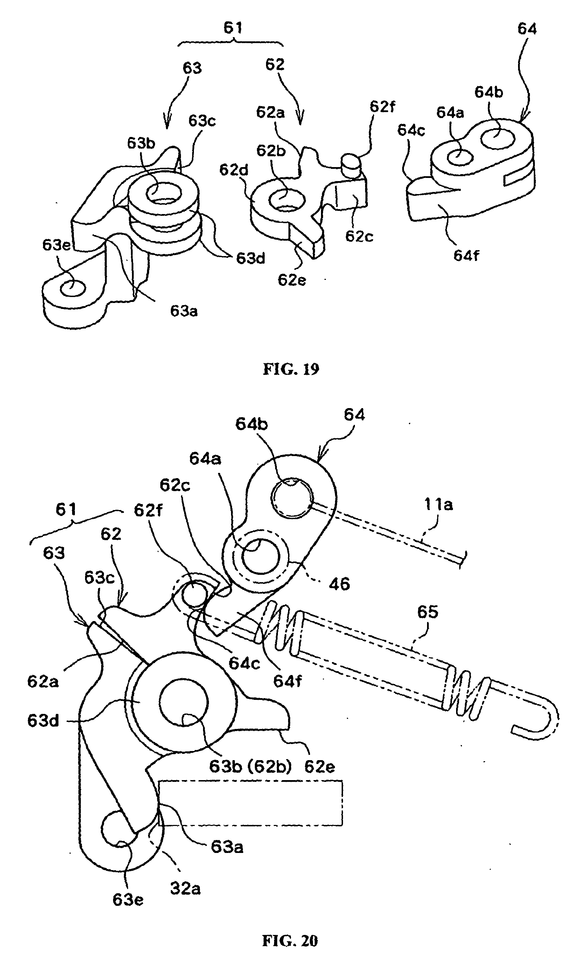

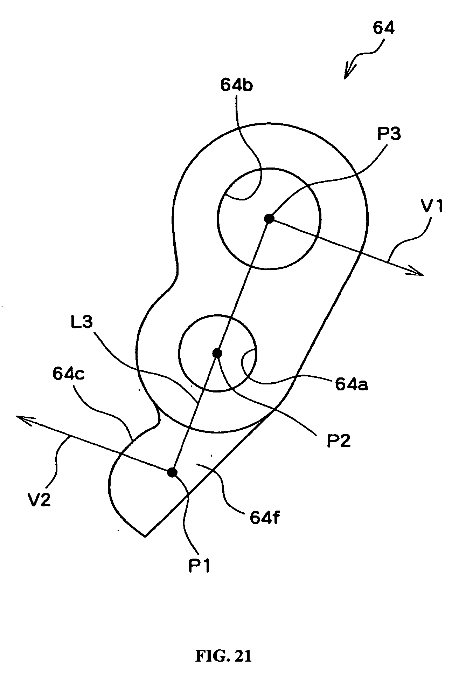

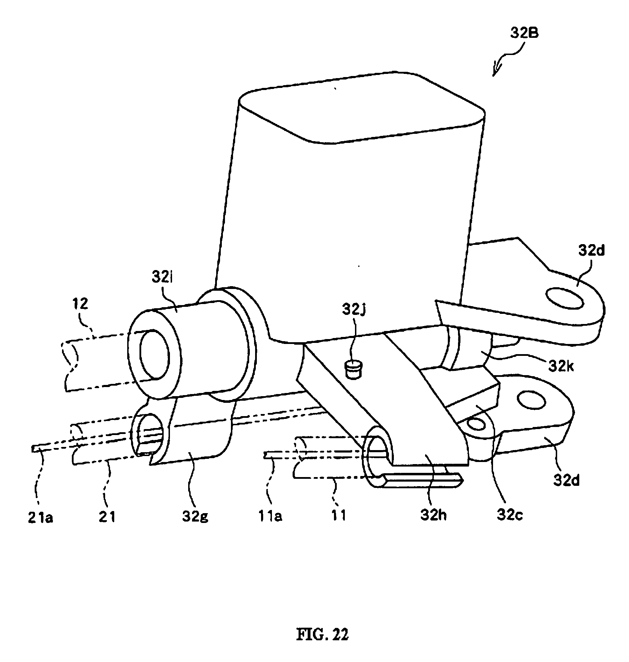

FIG. 18 is a plan view of a brake device 10B as an example of the brake device in accordance with this embodiment. FIG. 19 is an exploded perspective view of an equalizer 64 and an arm 61 of the brake device 10B. FIG. 20 is a plan view of the equalizer 64 and the arm 61. FIG. 21 is an enlarged view of the equalizer 64. FIG. 22 is a perspective view of a master cylinder 32B of the brake device 10B as viewed from the front. In these drawings, similar parts to those of the brake device 10 described above are given similar reference numerals and will not be described again. In the brake device 10B, the arm 61 and the master cylinder 32B constitute a front wheel brake actuation mechanism 30B.

As shown in FIG. 18, the brake device 10B includes, in addition to the equalizer 64 and the arm 61, an interlock brake lever 40B, and an urging member 65 for applying in advance a force in the direction opposite to that in which the arm 61 is moved when a brake operation is performed. The arm 61 includes a lever-side arm 62, and a cylinder-side arm 63 rotatable independently of the lever-side arm 62 (see FIG. 19).

The cylinder-side arm 63 rotates by being pressed by the lever-side arm 62, or by being pulled by the transmission cable 21 described above, to press the pressed part 32a of the master cylinder 32B. As shown in FIG. 19, the cylinder-side arm 63 has a cylinder pressing part 63a, a pair of upper and lower rotation supported parts 63d, 63d, a pressed part 63c, and a pulled part 63e. The lever-side arm 62 has a rotation supported part 62d, a lever-side pressed part 62c, a pressing part 62a, a stopper 62e, and an urging member attachment part 62f.

As shown in FIG. 20, the pressing part 62a of the lever-side arm 62 faces the pressed part 63c of the cylinder-side arm 63, and presses the pressed part 63c when the lever-side pressed part 62c of the lever-side arm 62 is pressed by the equalizer 64. This causes the lever-side arm 62 and the cylinder-side arm 63 to rotate together with each other.

The lever-side pressed part 62c of the lever-side arm 62 is drawn by the urging member 65 toward the equalizer 64 to be in contact with the arm pressing part 64c of the equalizer 64. In this example, the urging member 65 is an elastic member (for example, a spring) having a contraction force, and extends between the lever-side arm 62 and the master cylinder 32B (see FIG. 18). Specifically, the urging member attachment part 62f of the lever-side arm 62 projects upward from the lever-side pressed part 62c (see FIG. 19), and an end of the urging member 65 is attached to the urging member attachment part 62f. The master cylinder 32B is formed with an urging member attachment part 32j. As shown in FIG. 22, in the master cylinder 32B, the urging member attachment part 32j is formed at an intermediate portion of the rear wheel brake cable supporting part 32h extending forward. Here, the urging member attachment part 32j is a projection projecting upward, and the other end of the urging member 65 is attached to the urging member attachment part 32j . The urging member 65 pulls the urging member attachment part 62f of the lever-side arm 62 in the direction opposite to that in which the lever-side arm 62 is moved when a brake operation is performed.

As shown in FIG. 18 and FIG. 22, the master cylinder 32B has a positioning part 32k swelling or protruding slightly forward at a position opposite to the stopper 62e of the lever-side arm 62. The stopper 62e is in contact with the positioning part 32k (see FIG. 18), and determines the position of the lever-side arm 62 by restricting rotation of the lever-side arm 62 being pulled by the urging member 65.

The cylinder pressing part 63a, the rotation supported parts 63d, 63d, and the pulled part 63e of the cylinder-side arm 63 are respectively similar to the cylinder pressing part 31a, the rotation supported part 31d, and the pulled part 31e of the arm 31 described above. That is, the cylinder pressing part 63a is in contact with the pressed part 32a of the master cylinder 32B, and presses the pressed part 32a in response to an operation force of the interlock brake lever 40B. The rotation supported part 62d of the lever-side arm 62 is disposed between the pair of upper and lower rotation supported parts 63d and 63d. As shown in FIG. 19, the rotation supported part 63d and the rotation supported part 62d of the lever-side arm 62 are respectively formed with holes 63b, 62b, and the journal member 43 is inserted through the holes 63b, 62b in order for the lever-side arm 62 and the cylinder-side arm 63 to be rotatable about the journal member 43. The inner cable 21a of the transmission cable 21 is retained by the pulled part 63e, so that the pulled part 63e is pulled by the inner cable 21a when the front wheel brake lever 20 is operated. In FIG. 18, the pulling part 21c attached to an end of the inner cable 21a is not shown, and only the inner cable 21a is shown by the chain double dashed line.

As shown in FIG. 19 or FIG. 20, the equalizer 64 has a rotation supported part 64a positioned at its center, a cable attached part 64b provided at a position away from the rotation supported part 64a, an arm pressing part 64c also provided at a position away from the rotation supported part 64a, and a swelling or protruding part 64f. The engagement part 11d of the rear wheel brake cable 11 is retained by the cable attached part 64b (see FIG. 18 or FIG. 20), as with the cable attached part 42b of the rotary member 42 described above. The rear wheel brake cable 11 pulls the cable attached part 64b by the elastic force of the coil spring 11c (see FIG. 1). The rotation supported part 64a is a hole, through which the journal member 46 is inserted. The equalizer 64 is rotatable about the journal member 46. As shown in FIG. 20, the swelling part 64f swells or protrudes from the rotation supported part 64a in the direction opposite to the cable attached part 64b. The arm pressing part 64c is formed on a wall part of the swelling part 64f opposite to the lever-side pressed part 62c of the lever-side arm 62. The arm pressing part 64c is positioned on the side opposite to the cable attached part 64b across the rotation supported part 64a and in contact with the lever-side pressed part 62c of the lever-side arm 62. As the cable attached part 64b is pulled by the rear wheel brake cable 11, a rotational force about the journal member 46 acts on the equalizer 64. Therefore, the arm pressing part 64c presses the lever-side pressed part 62c.

In the example described here, as shown in FIG. 21, the line connecting the center P1 of the swelling part 64f, the center P2 of the rotation supported part 64a, and the center P3 of the cable attached part 64b is generally straight (straight line L3 in FIG. 21). The inner cable 11a pulls the cable attached part 64b in a direction generally perpendicular to the straight line L3 (in the direction V1 indicated in the drawing). The arm pressing part 64c presses the lever-side pressed part 62c of the lever-side arm 62 in a direction generally perpendicular to the straight line L3 (in the direction V2 indicated in the drawing).

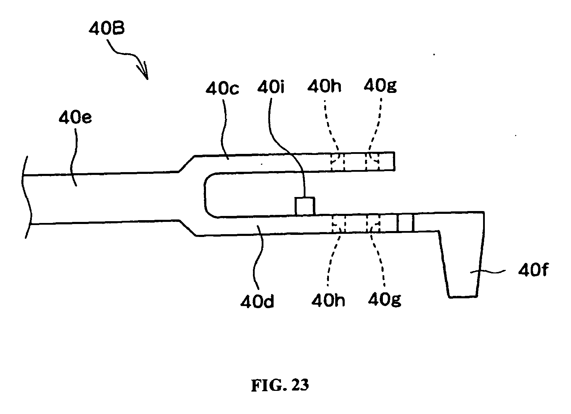

As shown in FIG. 18, the interlock brake lever 40B has a stopper 40i for restricting rotation of the equalizer 64 exceeding a preset amount. FIG. 23 is a front view of bases 40c, 40d of the interlock brake lever 40B. As shown in the drawing, the stopper 40i is a projection projecting from the base 40d toward the base 40c. As shown in FIG. 18, the stopper 40i is formed at a position slightly away from the arm pressing part 64c in the direction in which the arm pressing part 64c of the equalizer 64 is moved when the interlock brake lever 40B is operated.

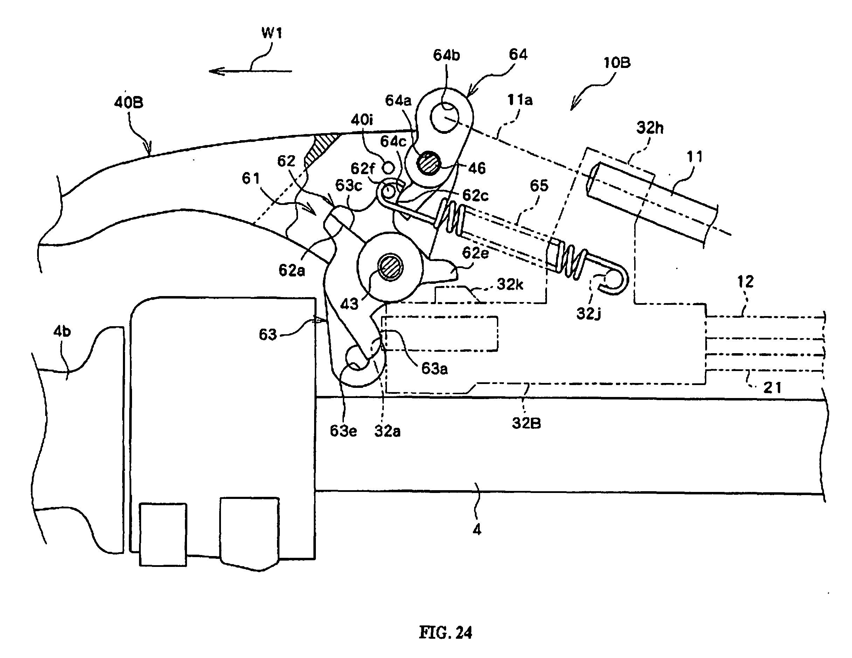

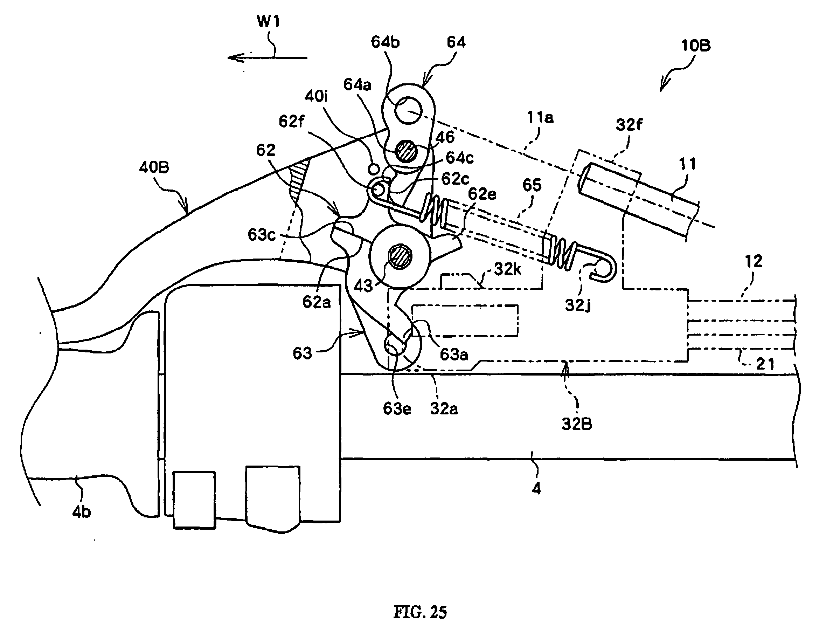

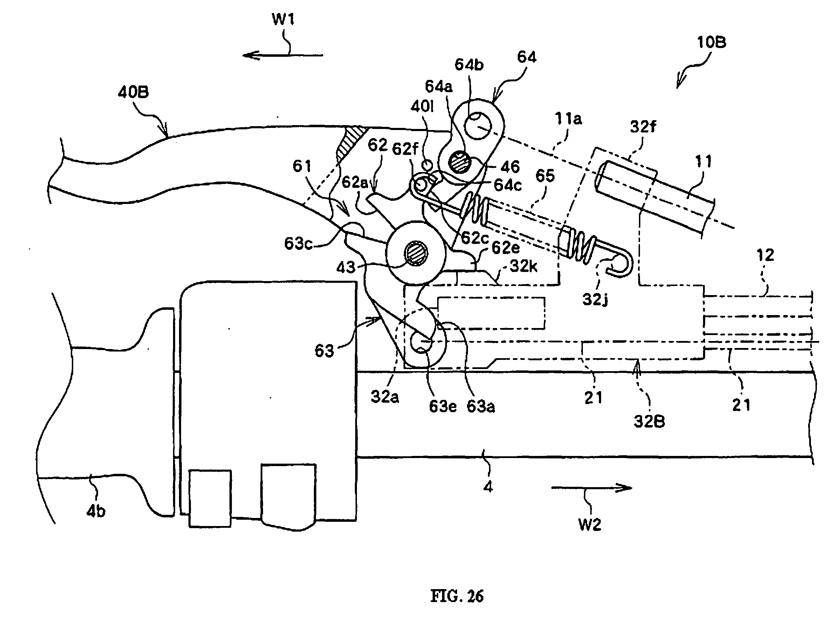

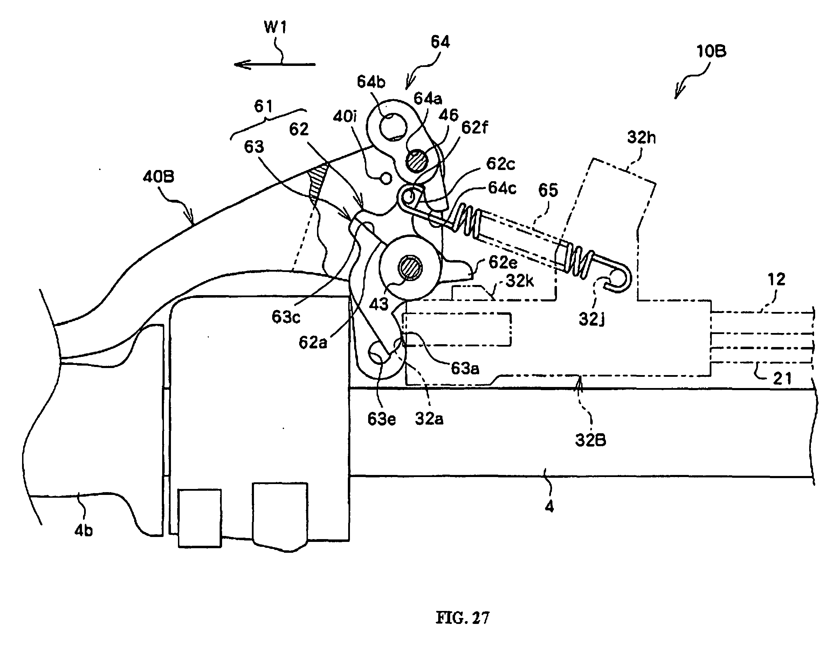

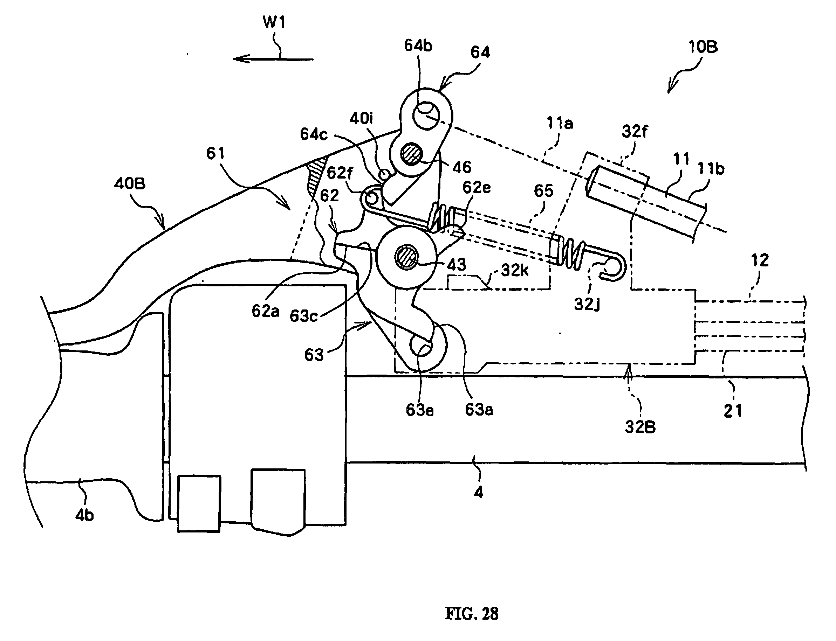

The operation of the brake device 10B will now be described. FIG. 24 and FIG. 25 are views for explaining the operation of the brake device 10B when the interlock brake lever 40B is operated. FIG. 26 is a view for explaining the operation of the brake device 10B when the front wheel brake lever 20 is operated. FIG. 27 is a view for explaining the operation of the brake device 10B when the inner cable 11a of the rear wheel brake cable 11 is disconnected. FIG. 28 is a view for explaining the operation of the brake device 10B in the case of oil leaks from the hydraulic path 12. In these drawings, the master cylinder 32B and the interlock brake lever 40B are simplified, and the rotation restriction part 32c of the master cylinder 32B and the stopper 40f of the interlock brake lever 40B are not shown. The inner cable 11a of the rear wheel brake cable 11 is shown by the chain double-dashed line.

First, a description is made of the operation of the brake device 10B when the interlock brake lever 40B is operated with reference to FIG. 24 and FIG. 25. When the interlock brake lever 40B is pulled toward the grip 4b and starts rotating as shown in FIG. 24, the equalizer 64 starts moving together with the interlock brake lever 40B in the lateral direction of the vehicle width (in the direction W1 indicated in the drawing). At this time, the cable attached part 64b of the equalizer 64 pulls the inner cable 11a of the rear wheel brake cable 11 outward in the vehicle width direction, and the arm pressing part 64c presses the lever-side pressed part 62c of the lever-side arm 62. In this way, the rear wheel brake 17 starts being actuated.

On the other hand, since the urging member 65 has been pulling the urging member attachment part 62f of the lever-side arm 62 in advance, the front wheel brake 14 does not start actuation. That is, the urging member 65 pulls the urging member attachment part 62f of the lever-side arm 62 in the direction opposite to that in which the equalizer 64 presses the lever-side arm 62. Therefore, the lever-side arm 62 and the cylinder-side arm 63 do not rotate until the urging force of the urging member 65 and the force of the arm pressing part 64c of the equalizer 64 to push the lever-side pressed part 62c balance each other. Thus, the front wheel brake 14 is not actuated initially when the interlock brake lever 40B starts being operated.

When the interlock brake lever 40B is further pulled toward the grip 4b as shown in FIG. 25, and when the force of the equalizer 64 to push the lever-side arm 62 exceeds that of the urging member 65, the lever-side arm 62 and the cylinder-side arm 63 rotate together with each other, and the cylinder pressing part 63a of the cylinder-side arm 63 presses the pressed part 32a of the master cylinder 32B. In this way, the front wheel brake 14 is also actuated.

The rotation supported part 64a of the equalizer 64 supported by the interlock brake lever 40B is positioned between the arm pressing part 64c and the cable attached part 64b (see FIG. 21). An operation force of the interlock brake lever 40B is divided into a force input from the cable attached part 64b to the rear wheel brake 17 (a force of the cable attached part 64b to pull the inner cable 11a) and a force input from the arm pressing part 64c to the front wheel brake 14 (a force of the arm pressing part 64c to press the lever-side arm 62) . The division ratio is determined by the ratio between the distance from the center P2 of the rotation supported part 64a to the center P3 of the cable attached part 64b and the distance from the center P2 of the rotation supported part 64a to the arm pressing part 64c. Thus, the division ratio of the equalizer 64 is generally constant throughout the process of the rotation of the interlock brake lever 40B.

A description will now be made of the operation of the brake device 10B with reference to FIG. 26. When the front wheel brake lever 20 is pulled toward the grip 4a (see FIG. 3), the inner cable 21a of the transmission cable 21 pulls the pulled part 63e of the cylinder-side arm 63 toward the center in the vehicle width direction (in the direction W2 indicated in the drawing). In this way, the cylinder pressing part 63a of the cylinder-side arm 63 presses the pressed part 32a of the master cylinder 32B as shown in FIG. 26 to actuate the front wheel brake 14. At this time, the pressed part 63c of the cylinder-side arm 63 moves away from the pressing part 62a of the lever-side arm 62, and the lever-side arm 62 and the interlock brake lever 40B are maintained in their respective positions.

A description will now be made of the operation of the brake device 10B with reference to FIG. 27. When the interlock brake lever 40B is pulled toward the grip 4b in a state where the inner cable 11a of the rear wheel brake cable 11 is disconnected, the rotation supported part 64a of the equalizer 64 moves outward in the vehicle width direction. At this time, the equalizer 64 rotates without resisting the reaction force received by the arm pressing part 64c from the lever-side pressed part 62c of the lever-side arm 62. As a result, the positions of the lever-side arm 62 and the cylinder-side arm 63 are maintained. In this way, it is possible to prevent actuation of only the front wheel brake 14 in the case where the interlock brake lever 40B is operated when the inner cable 11a of the rear wheel brake cable 11 is disconnected.

A description will now be made of the operation of the brake device 10B with reference to FIG. 28. When the interlock brake lever 40B is pulled toward the grip 4b with leakage of oil from the hydraulic path 12, the equalizer 64 pulls only the rear wheel brake cable 11 until the force of the arm pressing part 64c of the equalizer 64 to press the lever-side pressed part 62c of the lever-side arm 62 and the urging force of the urging member 65 balance each other, as in the case shown in FIG. 24. Subsequently, when the interlock brake lever 40B is further pulled toward the grip 4b, the reaction force received by the arm pressing part 64c of the equalizer 64 from the lever-side pressed part 62c of the lever-side arm 62 does not become greater than the urging force of the urging member 65 or more. Thus, the equalizer 64 is pulled by the rear wheel brake cable 11 to rotate. Then, as shown in FIG. 28, the arm pressing part 64c of the equalizer 64 comes into contact with the stopper 40i that is provided in front of the arm pressing part 64c in advance to restrict further rotation of the equalizer 64. As a result, the equalizer 64 further pulls the rear wheel brake cable 11 outward in the vehicle width direction, allowing the rear wheel brake 17 to further exert a braking force.

In the brake device 10B described above, the equalizer 64 is used as a member to input an operation force of the interlock brake lever 40B to the rear wheel brake 17 and the front wheel brake 14. The equalizer 64 divides an operation force of the interlock brake lever 40B into a force to input to the rear wheel brake 17 and a force to input to the front wheel brake 14 at a division ratio determined by the distance from the center of the rotation supported part 64a of the equalizer 64 to the arm pressing part 64c and the distance to the cable attached part 64b. Therefore, even in the case where the inner cable 11a has been slightly elongated by aging for example, the division ratio of an operation force of the interlock brake lever 40B is not influenced by the aging of the inner cable 11a so that the initial ratio is maintained.

In the brake devices 10, 10A, and 10B described above, an operation of the front wheel brake lever 20 by the rider is transmitted to the interlock brake lever 40 by the transmission cable 21. However, an operation of the front wheel brake lever 20 by the rider may be transmitted to the interlock brake lever 40 by a rod.

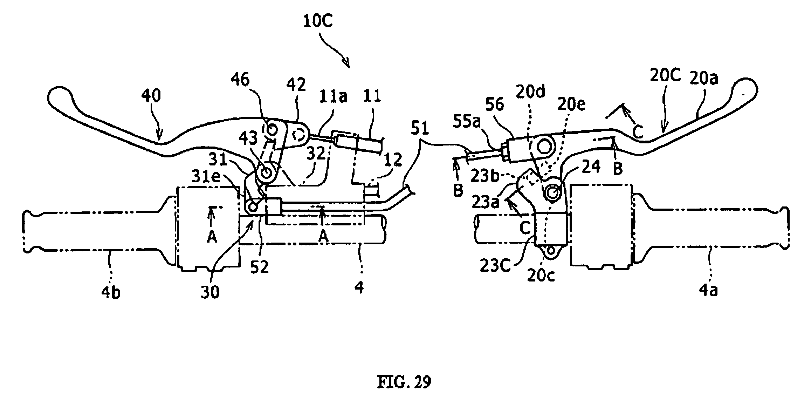

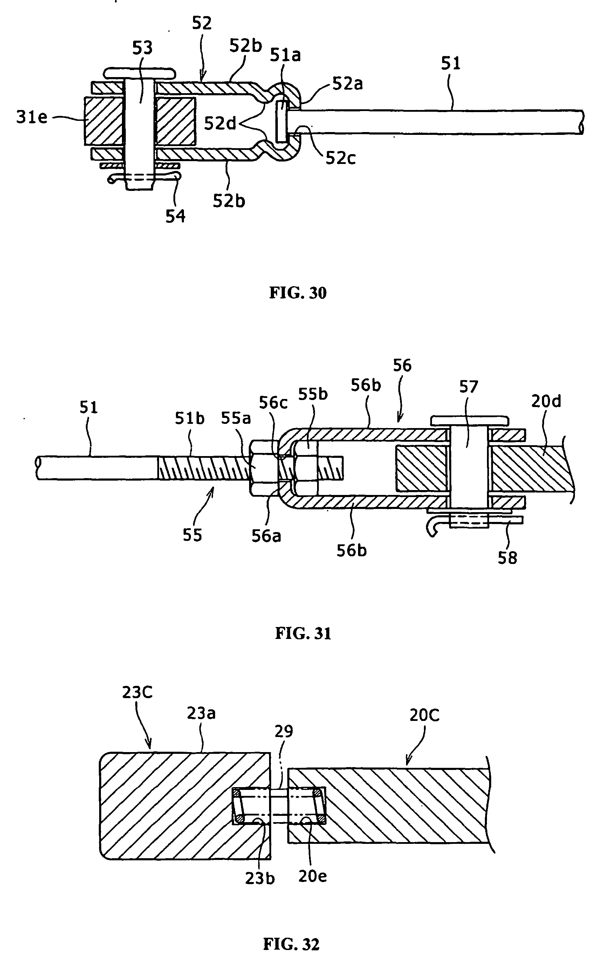

FIG. 29 is a schematic diagram of a brake device 10C in accordance with this embodiment. FIG. 30 is a cross sectional view taken along the line A-A of FIG. 29. FIG. 31 is a cross sectional view taken along the line B-B of FIG. 29. FIG. 32 is a cross sectional view taken along the line C-C of FIG. 29. In these drawings, similar parts to those described above are given similar reference numerals and will not be described again.

In the brake device 10C, as shown in FIG. 29, the interlock brake lever 40 described above is provided on the left handlebar 4, and a front wheel brake lever 20C is provided on the right handlebar 4. The brake device 10C includes a rod 51 as an operation force transmission member that transmits an operation of the front wheel brake lever 20C to the front wheel brake actuation mechanism 30. The rod 51 is made of a rigid material (for example, a metal). The rod 51 may extend straight, or may be slightly bent at an intermediate portion. The rod may be covered by a cover for covering the front part of the vehicle body, or may be disposed behind an instrument such as a speedometer, so as not to be exposed to the outside.

The rod 51 is disposed to extend from one of the handlebars 4 to the other thereof. One end of the rod 51 is coupled to the pulled part 31e of the arm 31, and relative movement between the rod 51 and the pulled part 31e is restricted unlike the case of the transmission cable 21 described above.

Specifically, as shown in FIG. 30, a coupler 52 for coupling the end of the rod 51 with the pulled part 31e is provided at the end of the rod 51. The coupler 52 includes a base 52a, and a pair of plates 52b, 52b extending perpendicularly from the base 52. The rod 51 is inserted through a hole 52c formed in the base 52a. An engagement part 51a having a larger diameter than that of the hole 52c is formed at the end of the rod 51. The engagement part 51a is disposed inside the coupler 52, and held by the base 52a and projections 52d, 52d formed by deforming a part of the pair of plates 52b, 52b inward. The pulled part 31e is disposed between the pair of plates 52b, 52b, and they are coupled by a pin 53. That is, a hole having a size corresponding to the diameter of the pin 53 is formed in each of the pair of plates 52b, 52b and the pulled part 31e, and the pin 53 is inserted through these holes. A split pin 54 is inserted into an end of the pin 53 to prevent the pin 53 from slipping off. In this way, the rod 51 and the pulled part 31e are coupled to each other in the state where relative movement therebetween is restricted. Here, a hole having a size corresponding to the diameter of the pin 53 is formed in each of the pair of plates 52b, 52b. However, an elongated hole may be formed instead, as in the pulling part 21c provided to the transmission cable 21 of the brake device 10 as described above (see FIG. 14).

As shown in FIG. 29, the front wheel brake lever 20C is supported for rotation by an attachment member 23C attached to the handlebar 4. That is, the supported part 20c is provided at the base of the front wheel brake lever 20C, as in the front wheel brake lever 20 described above. The journal member 24 (for example, a bolt) is inserted through a hole formed in the supported part 20c and a hole formed in the attachment member 23C, and the front wheel brake lever 20C is rotatable about the journal member 24.

A rod coupling part 20d is provided at the base of the front wheel brake lever 20C, besides the supported part 20c. The rod 51 is coupled in a state where relative movement not only to the pulled part 31e of the arm 31 but also to the rod coupling part 20d is restricted. The rod 51 is provided with an adjustment mechanism 55 for adjusting the distance between the rod coupling part 20d and the pulled part 31e (see FIG. 31).

Specifically, as shown in FIG. 31, the other end of the rod 51 is coupled to the rod coupling part 20d by a coupler 56. The coupler 56 includes a base 56a formed with a hole 56c through which the rod 51 is inserted, and a pair of plates 56b, 56b, as with the coupler 52 described above. The rod coupling part 20d is disposed between the pair of plates 56b, 56b, and they are coupled by a pin 57. A split pin 58 is inserted into the distal end of the pin 57 to prevent the pin 57 from slipping off. A thread 51b is formed on the outer peripheral surface of the other end of the rod 51, and the base 56a is held between two nuts 55a, 55b fitted on the thread 51b.

In this way, the rod 51 is coupled to the rod coupling part 20d by the coupler 56. The relative movement between the rod 51 and the rod coupling part 20d is restricted. Therefore, in the brake device 10C, when the interlock brake lever 40 is operated to rotate toward the grip 4b, the movement of the interlock brake lever 40 is transmitted to the front wheel brake lever 20C to rotate the front wheel brake lever 20C toward the grip 4a as well. In this way, it is possible to improve the operability of the interlock brake lever 40 and the front wheel brake lever 20C in the case where they are operated successively. That is, when an operation of the front wheel brake lever 20C is started in the middle of rotating the interlock brake lever 40 toward the grip 4b, the movement of the front wheel brake lever 20C is immediately transmitted to the arm 31, so that the front wheel brake 14 can be actuated by an operation force applied to the front wheel brake lever 20C.

The interlock brake lever 40, the front wheel brake lever 20C, the arm 31, and so forth are dimensionally and positionally configured such that the amount of movement made by the front wheel brake lever 20C when the interlock brake lever 40 is operated (when the interlock brake lever 40 is moved until it comes into contact with the grip 4b) does not exceed the movable range of the front wheel brake lever 20C (the range from the position before operation to the position where it comes into contact with the grip 4a). For example, the arm 31 and the front wheel brake lever 20C are dimensionally configured such that the distance from the center of rotation of the front wheel brake lever 20C (the center of the journal member 24) to the rod coupling part 20d is greater than that from the rotation center of the arm 31 (the center of the journal member 43) to the pulled part 31e.

As shown in FIG. 29 and FIG. 31, the adjustment mechanism 55 described above is made up of the two nuts 55a, 55b and the thread 51b, and the distance between the rod coupling part 20d and the pulled part 31e is adjusted by rotating the thread 51b. That is, the attachment position of the coupler 56 is moved in the longitudinal direction of the rod 51 to adjust the distance between the rod coupling part 20d and the pulled part 31e by rotating the thread 51b relative to the nuts 55a, 55b to move the position of the nuts 55a, 55b on the rod 51.

The front wheel brake lever 20C is configured, in the state before the rod 51 is connected, to be rotatable beyond the initial position of the front wheel brake lever 20C, that is, the position where the front wheel brake lever 20C is not operated (the position of the front wheel brake lever 20C shown in FIG. 29) in the direction away from the grip 4a (see FIG. 29). The initial position of the front wheel brake lever 20C can be set to an appropriate position within the movable range of the front wheel brake lever 20C by adjusting the distance between the rod coupling part 20d and the pulled part 31e with the adjustment mechanism 55. That is, the initial position of the grasped part 20a of the front wheel brake lever 20C can be brought closer to the grip 4a by rotating the rod 51, moving the attachment position of the coupler 56 on the rod 51, and increasing the distance between the rod coupling part 20d and the pulled part 31e by. In contrast, the initial position of the grasped part 20a can be brought away from the grip 4a by reducing the distance between the rod coupling part 20d and the pulled part 31e.

In some cases, the attachment position of the attachment member 23C on the handlebar 4 is out of alignment due to a production error or the like, and therefore the initial position of the front wheel brake lever 20C is too close to or too much away from the grip 4a. Also in such cases, the initial position of the grasped part 20a can be set appropriately by adjusting the distance between the rod coupling part 20d and the pulled part 31e.

As shown in FIG. 32, the brake device 10C is provided with a spring 29 for urging the front wheel brake lever 20C in the direction of pulling the rod 51. In the example described here, a spring holding part 23a is provided at a position of the attachment member 23C which faces the base of the front wheel brake lever 20C. One end of the spring 29 is accommodated in a recess 23b formed in the spring holding part 23a, and the other end thereof is accommodated in a recess 20e formed in the base of the front wheel brake lever 20C. The spring 29 is a compression spring, and exerts a force in the direction of moving the base of the front wheel brake lever 20C and the spring holding part 23a away from each other. The spring 29 prevents the front wheel brake lever 20C from rattling.

In the brake device 10C described above, the rod 51 is provided as an operation force transmission member. Therefore, it is possible to further reduce the transmission loss of an operation force in the transmission path reaching from the front wheel brake lever to the front wheel brake actuation mechanism. Since a rod does not elongate over time compared to a cable, length adjustment work by a user is unnecessary. As a result, it is possible to prevent the user from making inappropriate adjustment.

### Description of Reference Numerals and Symbols

1: motorcycle
2: front wheel
3: rear wheel
4: handlebars
5a: front suspension
5b: fork pipe
6a: under bracket
6b: top bridge
7: steering shaft
8: engine
9: attachment member
10, 10A, 10B, 10C: brake device
11: rear wheel brake cable
12: hydraulic path
13: link member
14: front wheel brake
15: brake disc
16: caliper
17: rear wheel brake
20, 20C: front wheel brake lever
21: transmission cable (operation force transmission member)
22: journal member
23, 23C: attachment member
30, 30B: front wheel brake actuation mechanism
31, 61: arm
32, 32B: master cylinder
34: torsion spring
40, 40B: interlock brake lever
42: rotary member (input member)
42c: arm pressing part (operation force input part)
42b: cable attached part (supported part)
43: journal member
44: washer
45: nut
46: journal member
47: washer
48: retaining member
51: rod (operation force transmission member)
51b: thread
52, 56: coupler
55: adjustment mechanism
55a, 55b: nut
62: lever-side arm
63: cylinder-side arm
64: equalizer (input member)
64a: rotation supported part
64b: cable attached part
64c: arm pressing part (operation force input part)
65: urging member
h: gap (play) between arm pressing part and lever-side pressed part
P: center of rotational displacement of rotary member
L1: distance from center of rotational displacement of rotary member to arm pressing part
L2: distance from center of rotational displacement of rotary member to cable attached part

## Claims

1. A brake device (10) comprising:
a front wheel brake lever (20) adapted to be positioned on a first side of a handlebar (4) of a vehicle (1);
an interlock brake lever (40) adapted to be positioned on a second side of the handlebar (4) and connected to a rear wheel brake (17);
a front wheel brake actuation mechanism (30) to generate a fluid pressure in a hydraulic path (12) connected to a front wheel brake (14) by an operation force of the front wheel brake lever (20) or the interlock brake lever (40) to actuate the front wheel brake (14); and
an operation force transmission member (21) extending between the first and second sides of the handlebar (4) wherein
the front wheel brake actuation mechanism (30) includes a master cylinder (32) and an arm (31) that receives the operation force of the front wheel brake lever (20) or the interlock brake lever (40) to press the master cylinder (32) by the received operation force to generate a fluid pressure in the hydraulic path (12), and
the arm (31) is configured to be displaceable relative to the operation force transmission member (21) when an operation force is input from the interlock brake lever (40) to the arm (31), **characterized in that** the front wheel brake actuation mechanism (30) is disposed adjacent to the interlock brake lever (40) so as to be positionable on the second side of the handlebar (4) and the operation force transmission member (21) is adapted to transmit an operation force of the front wheel brake lever (20) to the front wheel brake actuation mechanism (30).

2. The brake device (10) according to Claim 1, wherein a play is provided between the interlock brake lever (40) and the front wheel brake actuation mechanism (30) for delaying transmission of the operation force from the interlock brake lever (40) to the front wheel brake actuation mechanism (30).

3. The brake device (10) according to Claim 2, wherein the play is provided by a lost-motion arrangement.

4. The brake device (10) according to any preceding Claim, further comprising:
a rear wheel brake cable (11) for transmitting an operation force of the interlock brake lever (40) to the rear wheel brake (17); and
an input member (42) that receives the operation force of the interlock brake lever (40) to pull the rear wheel brake cable (11) and to input the operation force to the front brake actuation mechanism (30),
wherein the input member (42) is attached to the interlock brake lever (40).

5. The brake device (10) according to Claim 4,
wherein the input (42) member is provided to be displaceable by a reaction force received from the front wheel brake actuation mechanism (30) when the interlock brake lever (40) is operated, and
the rear wheel brake cable (11) suppresses displacement of the input member (42) against the reaction force received by the input member (42), so that the input member (42) inputs the operation force of the interlock brake lever (40) to the front wheel brake actuation mechanism (30) against the reaction force in a state where the displacement of the input member (42) is suppressed.

6. The brake device (10) according to Claim 4 or 5,
wherein the input member (42) has a supported part (42b) to be supported by the rear wheel brake cable (11), and an operation force input part (42c) for inputting the operation force of the interlock brake lever (40) to the front wheel brake actuation mechanism (30), the input member (42) being attached to the interlock brake lever (40) so as to be rotationally displaceable, and the supported part (42b) being configured to suppress rotational displacement of the input member (42) by being supported by the rear wheel brake cable (11), and
a distance (L1) from a center of the rotational displacement of the input member (42) to the operation force input part (42c) is shorter than that distance (L2) from the center to the supported part (42b).

7. The brake device (10B) according to Claim 4,
wherein the input member comprises an equalizer (64), and
the equalizer (64) has a rotation supported part (64a) to be supported for rotation by the interlock brake lever (40B), a cable attached part (64b) provided at a position away from the rotation supported part (64a) to pull the rear wheel brake cable (11), and an operation force input section (64c) provided at a position away from the rotation supported part (64a) to input the operation force of the interlock brake lever (40B) to the front wheel brake actuation mechanism (32B).

8. The brake device (10) according to Claim 7, wherein the rotation supported part (64a) of the input member is provided between the operation force input section (64c) and the cable attached part (64b).

9. The brake device (10) according to any one of Claims 1 to 3, further comprising:
an input member (64) for inputting an operation force of the interlock brake lever (40) to the front wheel brake actuation mechanism (30); and
an urging member (65) for applying to the front wheel brake actuation mechanism (30) a force in a direction opposite to that in which the input member (64) inputs the operation force of the interlock brake lever (40).

10. The brake device (10) according to any preceding Claim, wherein the operation force transmission member (51) comprises a rod extending between the first and second sides of the handlebar (4).

11. The brake device (10) according to Claim 10,
wherein the rod (51) is coupled to the front wheel brake actuation mechanism (30) and a coupling part (56) provided to the front wheel brake lever (20), and
the rod (51) is provided with an adjustment mechanism for adjusting a distance between the front wheel brake actuation mechanism (30) and the coupling part (56).

12. A straddle-type vehicle (1) comprising a brake device according to any preceding Claim.

## Patentansprüche

1. Bremsvorrichtung (10), umfassend:
einen Vorderradbremshebel (20), der dafür eingerichtet ist, auf einer ersten Seite eines Lenkers (4) eines Fahrzeugs (1) positioniert zu werden;
einen Synchronbremshebel (40), der dafür eingerichtet ist, auf einer zweiten Seite des Lenkers (4) positioniert und mit einer Hinterradbremse (17) verbunden zu werden;
einen Vorderradbremsbetätigungsmechanismus (30), um einen Flüssigkeitsdruck in einem Hydraulikweg (12), der mit einer Vorderradbremse (14) verbunden ist, durch eine Bedienkraft des Vorderradbremshebels (20) oder des Synchronbremshebels (40) zu erzeugen, um die Vorderradbremse (14) zu betätigen; und
ein Bedienkraftübertragungsglied (21), das sich zwischen der ersten und zweiten Seite des Lenkers (4) erstreckt, wobei:
der Vorderradbremsbetätigungsmechanismus (30) aufweist: einen Hauptzylinder (32) und einen Arm (31), der die Bedienkraft des Vorderradbremshebels (20) oder des Synchronbremshebels (40) aufnimmt, um den Hauptzylinder (32) durch die aufgenommene Bedienkraft zu drücken, um einen Flüssigkeitsdruck im Hydraulikweg (12) zu erzeugen, und
der Arm (31) dafür konfiguriert ist, relativ zum Bedienkraftübertragungsglied (21) verschiebbar zu sein, wenn dem Arm (31) eine Bedienkraft vom Synchronbremshebel (40) zugeführt wird;
**dadurch gekennzeichnet, dass**:
der Vorderradbremsbetätigungsmechanismus (30) angrenzend an den Synchronbremshebel (40) angeordnet ist, um **dadurch** auf der zweiten Seite des Lenkers (4) positionierbar zu sein, und das Bedienkraftübertragungsglied (21) dafür eingerichtet ist, eine Bedienkraft des Vorderradbremshebels (20) auf den Vorderradbremsbetätigungsmechanismus (30) zu übertragen.

2. Bremsvorrichtung (10) nach Anspruch 1, wobei ein Spiel zwischen dem Synchronbremshebel (40) und dem Vorderradbremsbetätigungsmechanismus (30) bereitgestellt wird, um die Übertragung der Bedienkraft vom Synchronbremshebel (40) auf den Vorderradbremsbetätigungsmechanismus (30) zu verzögern.

3. Bremsvorrichtung (10) nach Anspruch 2, wobei das Spiel durch eine Totganganordnung bereitgestellt wird.

4. Bremsvorrichtung (10) nach einem der vorhergehenden Ansprüche, ferner umfassend:
ein Hinterradbremskabel (11) zum Übertragen einer Bedienkraft des Synchronbremshebels (40) auf die Hinterradbremse (17); und
ein Zuführglied (42), das die Bedienkraft des Synchronbremshebels (40) aufnimmt, um am Hinterradbremskabel (11) zu ziehen und die Bedienkraft dem Vorderradbremsbetätigungsmechanismus (30) zuzuführen,
wobei das Zuführglied (42) am Synchronbremshebel (40) angebracht ist.

5. Bremsvorrichtung (10) nach Anspruch 4, wobei:
das Zuführglied (42) dafür ausgebildet ist, durch eine Reaktionskraft verschiebbar zu sein, die vom Vorderradbremsbetätigungsmechanismus (30) aufgenommen wird, wenn der Synchronbremshebel (40) betätigt wird, und
das Hinterradbremskabel (11) eine Verschiebung des Zuführglieds (42) gegen die durch das Zuführglied (42) aufgenommene Reaktionskraft unterdrückt, so dass das Zuführglied (42) in einem Zustand, wo die Verschiebung des Zuführglieds (42) unterdrückt wird, die Bedienkraft des Synchronbremshebels (40) dem Vorderradbremsbetätigungsmechanismus (30) gegen die Reaktionskraft zuführt.

6. Bremsvorrichtung (10) nach Anspruch 4 oder 5, wobei:
das Zuführglied (42) einen gelagerten Teil (42b) hat, der durch das Hinterradbremskabel (11) gelagert wird, und einen Bedienkraftzuführteil (42c), um die Bedienkraft des Synchronbremshebels (40) dem Vorderradbremsbetätigungsmechanismus (30) zuzuführen, wobei das Zuführglied (42) so am Synchronbremshebel (40) angebracht ist, dass es drehverschiebbar ist, und der gelagerte Teil (42b) dafür konfiguriert ist, eine Drehverschiebung des Zuführglieds (42) zu unterdrücken, indem er durch das Hinterradbremskabel (11) gelagert wird, und
ein Abstand (L1) von einem Zentrum der Drehverschiebung des Zuführglieds (42) zum Bedienkraftzuführteil (42c) kürzer als der Abstand (L2) vom Zentrum zum gelagerten Teil (42b) ist.

7. Bremsvorrichtung (10B) nach Anspruch 4, wobei:
das Zuführglied einen Ausgleichhebel (64) umfasst, und
der Ausgleichhebel (64) einen drehgelagerten Teil (64a) hat, um zur Drehung durch den Synchronbremshebel (40B) gelagert zu werden, einen am Kabel angebrachten Teil (64b), der an einer vom drehgelagerten Teil (64a) abgesetzten Position ausgebildet ist, um am Hinterradbremskabel (11) zu ziehen, und einen Bedienkraftzuführabschnitt (64c), der an einer vom drehgelagerten Teil (64a) abgesetzten Position ausgebildet ist, um die Bedienkraft des Synchronbremshebels (40B) dem Vorderradbremsbetätigungsmechanismus (32B) zuzuführen.

8. Bremsvorrichtung (10) nach Anspruch 7, wobei der drehgelagerte Teil (64a) des Zuführglieds zwischen dem Bedienkraftzuführabschnitt (64c) und dem am Kabel angebrachten Teil (64b) ausgebildet ist.

9. Bremsvorrichtung (10) nach einem der Ansprüche 1 bis 3, ferner umfassend:
ein Zuführglied (64), um eine Bedienkraft des Synchronbremshebels (40) dem Vorderradbremsbetätigungsmechanismus (30) zuzuführen; und
ein Antriebsglied (65) zum Ausüben einer Kraft auf den Vorderradbremsbetätigungsmechanismus (30) in einer Richtung, die derjenigen entgegengesetzt ist, in der das Zuführglied (64) die Bedienkraft des Synchronbremshebels (40) zuführt.

10. Bremsvorrichtung (10) nach einem der vorhergehenden Ansprüche, wobei das Bedienkraftübertragungsglied (21) eine Stange (51) umfasst, die sich zwischen der ersten und zweiten Seite des Lenkers (4) erstreckt.

11. Bremsvorrichtung (10) nach Anspruch 10, wobei die Stange (51) mit dem Vorderradbremsbetätigungsmechanismus (30) und einem am Vorderradbremshebel (20) ausgebildeten Kopplungsteil (56) gekoppelt ist und die Stange (51) mit einem Einstellmechanismus zum Einstellen eines Abstandes zwischen dem Vorderradbremsbetätigungsmechanismus (30) und dem Kopplungsteil (56) versehen ist.

12. Spreizsitzfahrzeug (1), umfassend eine Bremsvorrichtung nach einem der vorhergehenden Ansprüche.

## Revendications

1. Dispositif de frein (10) comprenant :
une poignée de frein de roue avant (20) adaptée pour être positionnée sur un premier côté d'un guidon (4) d'un véhicule (1) ;
une poignée de frein de verrouillage (40) adaptée pour être positionnée sur un deuxième côté du guidon (4) et raccordée à un frein de roue arrière (17) ;
un mécanisme d'actionnement de frein de roue avant (30) pour générer une pression de fluide dans un chemin hydraulique (12) raccordé à un frein de roue avant (14) par une force de commande de la poignée de frein de roue avant (20) ou de la poignée de frein de verrouillage (40) pour actionner le frein de roue avant (14) ; et
un élément de transmission de force de commande (21) s'étendant entre les premier et deuxième côtés du guidon (4), dans lequel :
le mécanisme d'actionnement de frein de roue avant (30) comprend un maître-cylindre (32) et un bras (31) qui reçoit la force de commande de la poignée de frein de roue avant (20) ou de la poignée de frein de verrouillage (40) pour comprimer le maître-cylindre (32) par la force de commande reçue afin de générer une pression de fluide dans le chemin hydraulique (12), et
le bras (31) est configuré pour pouvoir être déplacé par rapport à l'élément de transmission de force de commande (21) lorsqu'une force de commande est transmise de la poignée de frein de verrouillage (40) au bras (31), **caractérisé en ce que** :
le mécanisme d'actionnement de frein de roue avant (30) est disposé de manière adjacente à la poignée de frein de verrouillage (40) afin de pouvoir être positionné sur le deuxième côté du guidon (4), et l'élément de transmission de force de commande (21) est adapté pour transmettre une force de commande de la poignée de frein de roue avant (20) au mécanisme d'actionnement de frein de roue avant (30).

2. Dispositif de frein (10) selon la revendication 1, dans lequel on prévoit un jeu entre la poignée de frein de verrouillage (40) et le mécanisme d'actionnement de frein de roue avant (30) pour retarder la transmission de la force de commande de la poignée de frein de verrouillage (40) au mécanisme d'actionnement de frein de roue avant (30).

3. Dispositif de frein (10) selon la revendication 2, dans lequel le jeu est fourni par un agencement de rattrapage des jeux.

4. Dispositif de frein (10) selon l'une quelconque des revendications précédentes, comprenant en outre :
un câble de frein de roue arrière (11) pour transmettre une force de commande de la poignée de frein de verrouillage (40) au frein de roue arrière (17) ; et
un élément d'entrée (42) qui reçoit la force de commande de la poignée de frein de verrouillage (40) pour tirer le câble de frein de roue arrière (11) et transmettre la force de commande au mécanisme d'actionnement de frein avant (30),
dans lequel l'élément d'entrée (42) est fixé sur la poignée de frein de verrouillage (40).

5. Dispositif de frein (10) selon la revendication 4,
dans lequel l'élément d'entrée (42) est prévu pour pouvoir être déplacé par une force de réaction reçue du mécanisme d'actionnement de frein de roue avant (30) lorsque la poignée de frein de verrouillage (40) est actionnée, et
le câble de frein de roue arrière (11) supprime le déplacement de l'élément d'entrée (42) contre la force de réaction reçue par l'élément d'entrée (42), de sorte que l'élément d'entrée (42) transmet la force de commande de la poignée de frein de verrouillage (40) au mécanisme d'actionnement de frein de roue avant (30) contre la force de réaction dans un état dans lequel le déplacement de l'élément d'entrée (42) est supprimé.

6. Dispositif de frein (10) selon la revendication 4 ou 5,
dans lequel l'élément d'entrée (42) a une partie supportée (42b) destinée à être supportée par le câble de frein de roue arrière (11), et une partie d'entrée de force de commande (42c) pour transmettre la force de commande de la poignée de frein de verrouillage (40) au mécanisme d'actionnement de frein de roue avant (30), l'élément d'entrée (42) étant fixé à la poignée de frein de verrouillage (40) afin de pouvoir être déplacé en rotation, et la partie supportée (42b) étant configurée pour supprimer le déplacement rotatif de l'élément d'entrée (42) en étant supportée par le câble de frein de roue arrière (11), et
une distance (L1) allant d'un centre de déplacement rotatif de l'élément d'entrée (42) jusqu'à la partie d'entrée de force de commande (42c) est plus courte que la distance (L2) allant du centre à la partie supportée (42b).

7. Dispositif de frein (1 0B) selon la revendication 4,
dans lequel l'élément d'entrée comprend un égaliseur (64), et
l'égaliseur (64) a une partie supportée en rotation (64a) destinée à être supportée pour la rotation par la poignée de frein de verrouillage (40B), une partie de fixation de câble (64b) prévue dans une position à distance de la partie supportée en rotation (64a) pour tirer le câble de frein de roue arrière (11), et une section d'entrée de force de commande (64c) prévue dans une position à distance de la partie supportée en rotation (64a) pour transmettre la force de commande de la poignée de frein de verrouillage (40B) au mécanisme d'actionnement de frein de roue avant (32B).

8. Dispositif de frein (10) selon la revendication 7, dans lequel la partie supportée en rotation (64a) de l'élément d'entrée est prévue entre la section d'entrée de force de commande (64c) et la partie de fixation de câble (64b).

9. Dispositif de frein (10) selon l'une quelconque des revendications 1 à 3, comprenant en outre :
un élément d'entrée (64) pour transmettre une force de commande de la poignée de frein de verrouillage (40) au mécanisme d'actionnement de frein de roue avant (30) ; et
un élément de poussée (65) pour appliquer, sur le mécanisme d'actionnement de frein de roue avant (30), une force dans une direction opposée à celle dans laquelle l'élément d'entrée (64) transmet la force de commande de la poignée de frein de verrouillage (40).

10. Dispositif de frein (10) selon l'une quelconque des revendications précédentes, dans lequel l'élément de transmission de force de commande (51) comprend une tige s'étendant entre les premier et deuxième côtés du guidon (4).

11. Dispositif de frein (10) selon la revendication 10,
dans lequel la tige (51) est couplée au mécanisme d'actionnement de frein de roue avant (30) et une partie de couplage (56) prévue sur la poignée de frein de roue avant (20), et
la tige (51) est prévue avec un mécanisme d'ajustement pour ajuster une distance entre le mécanisme d'actionnement de frein de roue avant (30) et la partie de couplage (56).

12. Véhicule de type à selle (1) comprenant un dispositif de frein selon l'une quelconque des revendications précédentes.
